# EUROPEAN PATENT SPECIFICATION

(11) **EP 2 355 205 B1**
(45) Date of publication and mention of the grant of the patent: **14.11.2012**
(21) Application number: 10002453.8
(22) Date of filing: 09.03.2010
(51) Int. Cl.: H01M 2/10, H01M 2/20, H01M 2/22, H01M 2/30

(54) **Battery system with a plurality of batteries housed in an external case**
Batteriesystem mit mehreren Batterien, die in einem äußeren Gehäuse untergebracht sind
Système de batterie avec plusieurs batteries logées dans un boîtier externe

(30) Priority: 27.01.2010 JP 2010015524
(43) Date of publication of application: 10.08.2011
(73) Proprietor: SANYO Electric Co., Ltd., Moriguchi-shi Osaka 570-8677 (JP); Yamaha Hatsudoki Kabushiki Kaisha, Shizuoka-ken 438-8501 (JP)
(72) Inventor: YONEDA, Haruhiko, c/o Intellectual Property H.Q.,, Moriguchi City, Osaka 570-8677 (JP); FUKUKAWA, Kouichi, c/o Intellectual Property H.Q.,, Moriguchi City, Osaka 570-8677 (JP); YONEYAMA, Shingo, c/o Intellectual Property H.Q.,, Moriguchi City, Osaka 570-8677 (JP); TERADA, Junji, c/o Yamaha Hatsudoki Kabushiki Kaisha, Shizuoka-ken 438-8501 (JP); NISHIYAMA, Motokuni, c/o Yamaha Hatsudoki Kabushiki Kaisha, Shizuoka-ken 438-8501 (JP)
(74) Representative: Beier, Ralph

(56) References cited:
- EP-A2- 2 099 085
- JP-A- 2009 176 689

## Description

### BACKGROUND OF THE INVENTION

### 1. Field of the Invention

The present invention relates to a battery system made up of a plurality of batteries housed in an external case, and in particular to a battery system optimally suited for use in an electric powered vehicle such as an electric motor-bike.

### 2. Description of the Related Art

A battery system used in an electric vehicle such as an electric motor-bike houses many batteries to increase output. Here, both high output voltage and current are required. For practical implementation, a battery system that disposes a plurality of batteries in parallel orientation in multiple rows and columns has been developed. In this battery system, lead-plates connect adjacent batteries in series and parallel by for high voltage and high current output.

Refer to Japanese Laid-Open Patent Publication No. 2009-176689.

This other prior art battery system is disclosed in EP209985 A2.

### SUMMARY OF THE INVENTION

As shown in Fig. 1, the battery system cited in JP 2009-176689 A disposes a plurality of batteries in parallel orientation in multiple rows and columns and connects lead-plates 113 to the electrodes at the ends of each battery. The lead-plates 113 connect all the batteries in one column in parallel, and connect adjacent columns of batteries in series. This connects each of many rows of batteries in series for high output current and voltage. In this battery system, lead-plates 113 at the output ends are connected to a circuit board 115, and output leads 116 are connected to that circuit board 115. This battery system has the drawback that the electrical resistance of the external output sections connected to the output ends of the batteries is high and discharge efficiency is reduced. Since one end of the output lead-plates 113X is connected to the circuit board 115, and the output leads 116 are connected to that circuit board 115, this battery system has the drawback that output loss is high at the output leads and lead-plates. It also has the drawback that the output leads cannot be connected out in a robust structure, and since the positive and negative sides are in proximity, accidental short circuit can occur easily. Further, since the output lead-plates 113X are connected to the circuit board 115 and since the output leads 116 are connected to the circuit board 115 and run inside the external case, this battery system has the drawback that space is not used efficiently.

The present invention was developed with the object of further resolving the drawbacks described above. Thus, it is an object of the present invention to provide a battery system that can implement a sturdy output structure while improving battery discharge efficiency and reducing power losses. A further object is to provide a battery system that can improve space utilization and neatly house power output sections in a small space while effectively preventing short circuit between the positive and negative sides.

The battery system of the present invention is provided with a battery assembly 10 housed in an external case 2 and disposing a plurality of rechargeable batteries 1 in fixed positions. The battery assembly 10 is provided with a plurality of batteries 1 that can be charged; a battery holder 11 that disposes the plurality of batteries 1 in multiple rows and columns; a plurality.of lead-plates 3 connected to the electrodes 1A at the ends of the batteries 1 disposed in fixed positions in the battery holder 11 to connect adjacent batteries 1 in series and parallel; and external outputs 9 connected to output lead-plates 3X, which are the lead-plates 3 disposed at the output-sides of the batteries 1, to take the battery 1 output outside the battery system. The battery holder 11 disposes a plurality of batteries 1 in multiple rows and columns and in parallel orientation to expose the electrodes 1A at both ends of the batteries 1 in positions allowing connection to the lead-plates 3. The battery system connects a plurality of lead-plates 3 to the battery 1 electrodes 1A to connect all the batteries 1 in a single column in parallel and adjacent columns of batteries 1 in series. The multiple columns of batteries 1 are connected in series; a positive output lead-plate 3Xa is connected to one end of the battery assembly 10, and a negative output lead-plate 3Xb is connected to the other end. Further, the battery assembly 10 has a positive external output 9 disposed at the end of the positive output lead-plate 3Xa, and a negative external output 9 disposed at the end of the negative output lead-plate 3Xb. In addition, the output lead-plates 3X are provided with battery connecting sections 3A that connect a plurality of batteries 1 in parallel, and output extensions 3B joined to the sides of the battery connecting sections 3A that connect to the external outputs 9.

The battery system described above has the characteristic that it achieves a robust output structure while improving battery discharge efficiency and reducing power losses. The battery system also has the characteristic that it efficiently utilizes space to neatly house output sections in a confined space while effectively preventing short circuits between the positive and negative sides. This is because the battery system disposes a plurality of batteries in parallel orientation in multiple rows and columns connecting batteries in the same column in parallel and adjacent columns in series via lead-plates to connect the multiple columns in series with a positive-side and a negative-side, and a positive output lead-plate is disposed at one end of the battery assembly while a negative output lead-plate is disposed at the other end. Further, a positive external output is disposed at the positive output lead-plate end of the battery assembly and a negative external output is disposed at the negative output lead-plate end. The positive and negative output lead-plates are provided with battery connecting sections that connect a plurality of batteries in parallel, and output extensions joined to the sides of the battery connecting sections that connect to the external outputs. In particular, since the output extensions provided on the output lead-plates directly connect to the external outputs, the battery system is characterized by extremely low resistance between the batteries and the external outputs reducing power losses and increasing battery discharge efficiency. Further, since the positive external output is disposed at one end of the battery assembly and the negative external output is disposed at the other end, the positive and negative external outputs are separated to effectively prevent short circuits. In addition, since the output lead-plates directly connect to the external outputs, external outputs can have a sturdy structure while efficiently utilizing battery system space.

In the battery system of the present invention, the external outputs 9 are provided with output terminal lead-plates 8 mounted on the battery holder 11, and output terminals 7 attached to the output terminal lead-plates 8 with one part exposed outside the external case 2. In this battery system, since the output lead-plates connect to the output terminal lead-plates to allow power output from the output terminals exposed outside the external case, the external outputs can have a particularly sturdy structure.

In the battery system of the present invention, an output terminal lead-plate 8 can be made up of a first lead-plate 81A connected to an output lead-plate 3X output extension 3B and a second lead-plate 81 B connected to an output terminal 7. The first lead-plate 81A and the second lead-plate 81 B can be connected via a service plug 4 or a protection device. In this battery system, the service plug or protection device can be connected in a low resistance manner that efficiently utilizes space while attaching the service plug or protection device with a robust structure.

In the battery system of the present invention, an output terminal lead-plate 8 can be provided with a lead-plate piece 82 that connects an output lead-plate 3X output extension 3B to an output terminal 7. The output extension 3B and the lead-plate piece 82 can be connected by a protection device 6 or service plug. In this battery system, the protection device or service plug can be connected in a low resistance manner that efficiently utilizes space while attaching the protection device or service plug with a robust structure.

In the battery system of the present invention, the output lead-plate 3X output extensions 3B gradually become wider from the bent end-section 3b at the external outputs 9 towards the battery connecting sections 3A. Further, the output extensions 3B are bent with respect to the battery connecting sections 3A in a direction parallel with the lengthwise direction of the batteries 1. This battery system can reduce the electrical resistance of the output lead-plate output extensions connected to the external outputs and allow efficient extraction of high power from the batteries. Further, the output extensions are disposed along the ends of the battery assembly, and the external outputs are disposed offset from the battery end-planes for ideal, efficient space utilization.

The battery system of the present invention can expose the output terminals 7 from the surface of the external case 2. In this battery system, since the output terminals are exposed from the surface of the external case, external leads can be easily connected to the battery system.

In the battery system of the present invention, the external case 2 can be divided into a first external case 2A and a second external case 2B, and the first external case 2A and the second external case 2B can be fastened together with case attachment screws 38. Further, the external case 2 can be provided with screw bosses 29 to attach the battery holder 11 in a fixed position, and the battery holder 11 can have case-mounting pieces 19 to insert the external case 2 screw bosses 29 in specified positions. The screw bosses 29 can be inserted into the case-mounting pieces 19 to connect the battery holder 11 in a fixed position in the external case 2, and the first external case 2A and the second external case 2B can be fastened with case attachment screws 38 to hold the battery holder 11 in a fixed position inside the external case 2. This battery system can hold the external case and battery holder together in accurate, fixed positions.

In the battery system of the present invention, the battery holder 11 can be provided with alignment projections 59 to join the lead-plates 3, and the lead-plates 3 can have alignment holes 3c for insertion of the alignment projections 59. The lead-plates 3 can be disposed in fixed positions on the battery holder 11 by inserting the alignment projections 59 in the alignment holes 3c. In this battery system, the battery holder alignment projections can be inserted in lead-plate alignment holes during the process step that connects lead-plates to the electrodes at the ends of the plurality of batteries held in the battery holder. This allows the lead-plates to be disposed in specified positions on the battery holder in a manner that does not come apart. Consequently, a plurality of lead-plates can be efficiently connected to the battery electrodes while temporarily attaching those lead-plates to the battery holder.

The battery system of the present invention can be installed on-board an electric powered vehicle. The above and further objects of the present invention as well as the features thereof will become more apparent from the following detailed description to be made in conjunction with the accompanying drawings.

### BRIEF DESCRIPTION OF THE DRAWINGS

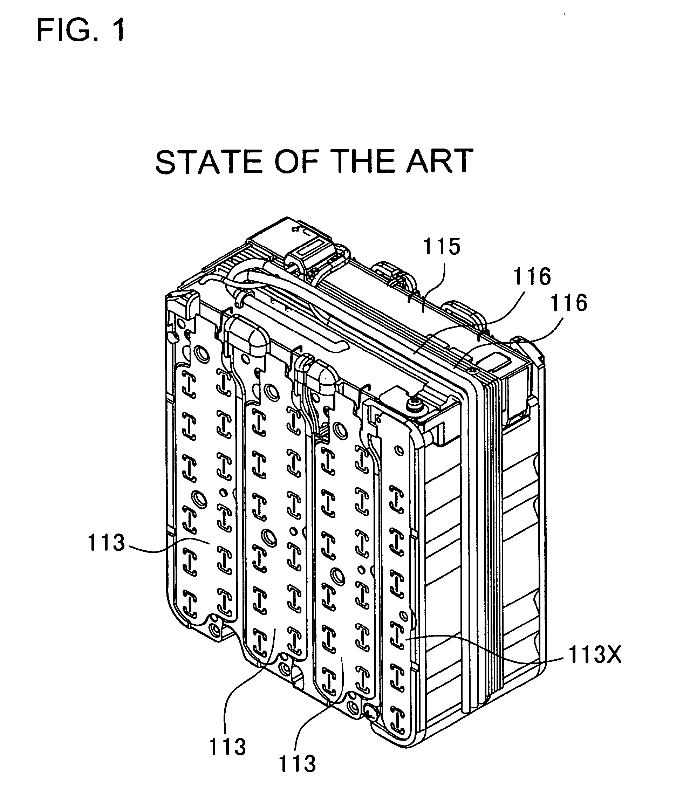

Fig. 1 is an oblique view showing a prior art battery system;
Fig. 2 is an oblique view of a battery system for an embodiment of the present invention;
Fig. 3 is an exploded oblique view of the battery system shown in Fig. 2;
Fig. 4 is an oblique view from behind of the battery system shown in Fig. 3;
Fig. 5 is an oblique view of the battery assembly of the battery system shown in Fig. 3;
Fig. 6 is an oblique view from the left side of the battery assembly shown in Fig. 5;
Fig. 7 is an exploded oblique view of the battery assembly shown in Fig. 5;
Fig. 8 is an exploded oblique view of the battery assembly shown in Fig. 7;
Fig. 9 is an enlarged cross-section view through the line IX-IX of Fig. 2 showing an output terminal of the battery system shown in Fig. 2;
Fig. 10 is an enlarged cross-section view through the line X-X of Fig. 2 showing an output terminal of the battery system shown in Fig. 2;
Fig. 11 is an enlarged oblique cross-section view showing an external case through-hole;
Fig. 12 is a diagram showing a plurality of batteries connected in series;
Fig. 13 is an exploded oblique view showing the connecting structure of an output lead-plate of the battery assembly shown in Fig. 6;
Fig. 14 is an exploded oblique view with enlarged insets showing the connecting structure of the lead-plates and the battery holder;
Fig. 15 is an exploded oblique view showing the connecting structure of an output lead-plate of the battery assembly shown in Fig. 6;
Fig. 16 is an enlarged oblique view of the metal rod that is an output terminal;
Fig. 17 is a circuit diagram of the battery system for an embodiment of the present invention;
Fig. 18 is an exploded oblique view showing the service plug detached from the external case;
Fig. 19 is an exploded oblique view of the service plug shown in Fig. 18;
Fig. 20 is an exploded oblique view from opposite side of the service plug shown in Fig. 19;
Fig. 21 is an enlarged cross-section view showing the connecting structure of the external case and the service plug; and
Fig. 22 is an enlarged cross-section view showing the connecting structure of the cover casing and the inner casing.

### DETAILED DESCRIPTION OF THE EMBODIMENT(S)

The following describes embodiments of the present invention based on the figures.

The battery system of the present invention is primarily installed on-board an electric motor-bike, and is most suitable as a power source to supply electric power to a motor for driving an electric scooter or motorcycle. However, the battery system of the present invention is not limited to use in an electric motor-bike and can also be installed as a power source used to drive an electric vehicle such as an electric automobile or an electrically powered bicycle. Further, the battery system of the present invention is not limited to use in an electric vehicle and can also be used as a power source for various electrical equipment that require high power output.

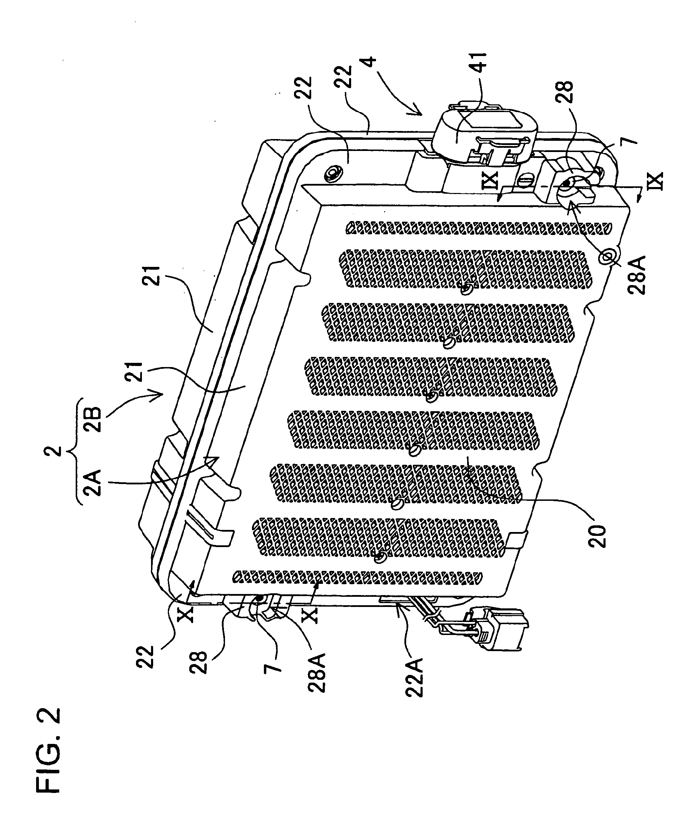

The battery system shown in Figs. 2-8 is provided with an external case 2 molded from insulating material in a water-tight construction housing a battery assembly 10 that disposes a plurality of batteries 1 in fixed positions and connects them in series and parallel, and a pair of external outputs 9 with output terminals 7 exposed from the surface of the external case 2 in a water-tight configuration and connected to the positive and negative output-sides of the batteries 1 inside. In the battery system of the figures, the external outputs 9 are made up of output terminal lead-plates 8 and output terminals 7. The output terminal lead-plates 8 are made up of lead-plate pieces 81, 82 that are metal plates connected to the battery assembly 10 lead-plates 3. The output terminals 7 are metal rods 70 that connect to the output terminal lead-plates 8. Although not illustrated, the external outputs can also have output terminals and output terminal lead-plates that are made from metal as a single piece.

### [external case]

The external case 2 shown in Figs. 2-4 is a box-shaped enclosure that houses the battery assembly 10 in a water-tight configuration. The external case 2 is made of molded plastic. The external case 2 of the figures has rectangular surface plates 20, and perimeter walls 21 connecting those rectangular surface plates 20. Although the external case 2 shown in the figures has a structure that is sealed in a water-tight manner, an external case with a water-tight structure is not always a requirement. For example, the external case can be configured with a water discharging hole at the bottom to discharge any water that has entered from the bottom of the case.

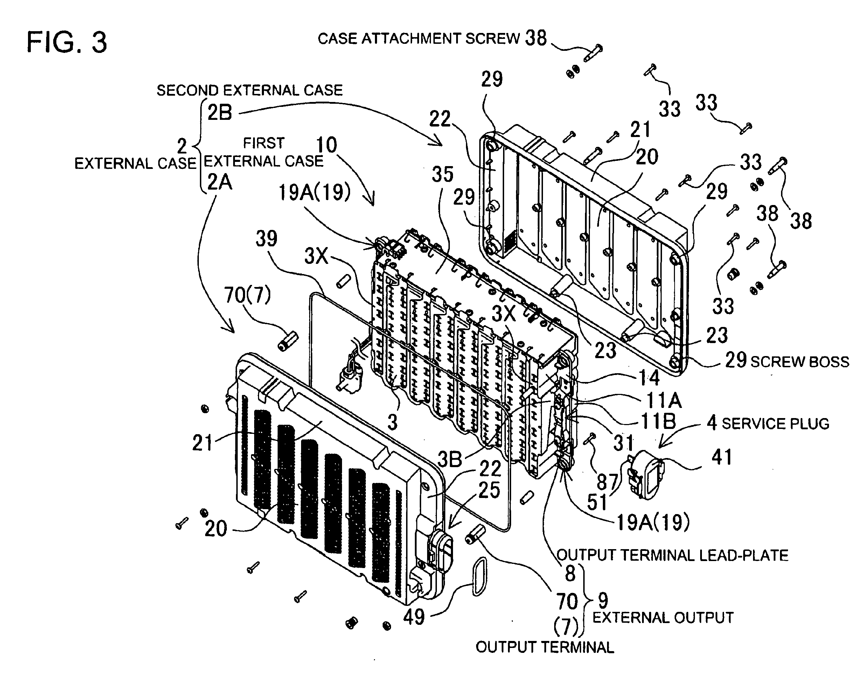

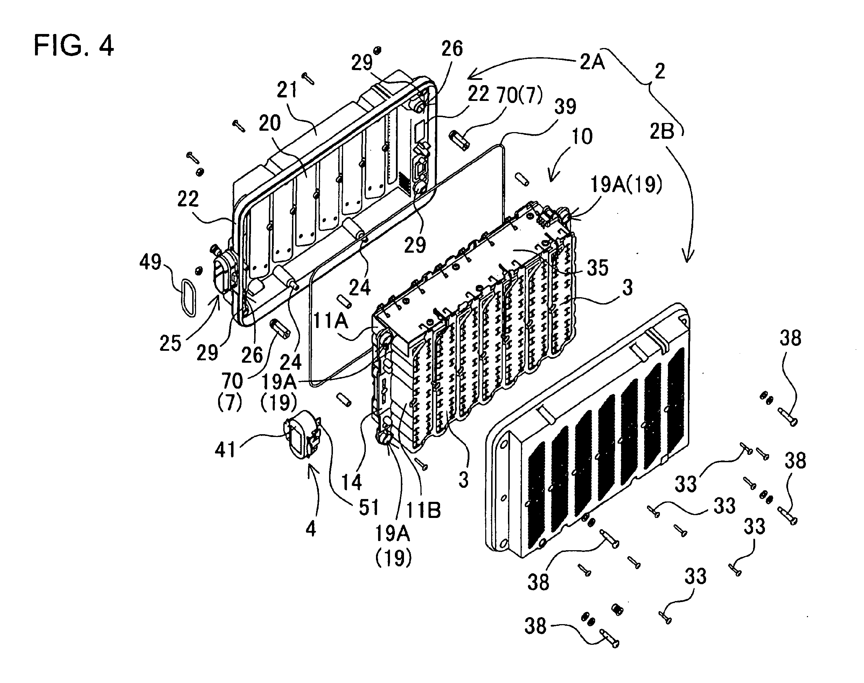

The external case 2 of Figs. 3 and 4 houses the battery assembly 10 in a manner that disposes each battery 1 perpendicular to the surface plates 20. This disposes electrodes 1A at the ends of the batteries 1 opposite the inside surfaces of the surface plates 20. A battery system that holds the battery assembly 10 in this configuration houses all the batteries 1 in parallel orientation. Since lead-plates 3 are connected to all the battery 1 electrodes 1A, the lead-plates 3 are disposed between the batteries 1 and the surface plates 20.

The external case 2 is molded from insulating plastic such as acrylonitrile-butadiene-styrene (ABS) resin, it is divided into two parts at the middle of the perimeter walls 21, and is connected together in a water-tight manner by screw-fastening. However, the two external case pieces can also be connected by techniques such as pressure fitting, thermal weld-attachment, or adhesive bonding. The external case 2 can be designed in various sizes and shapes depending on the battery system application, purpose, operating conditions, and the size, shape, and number of batteries employed.

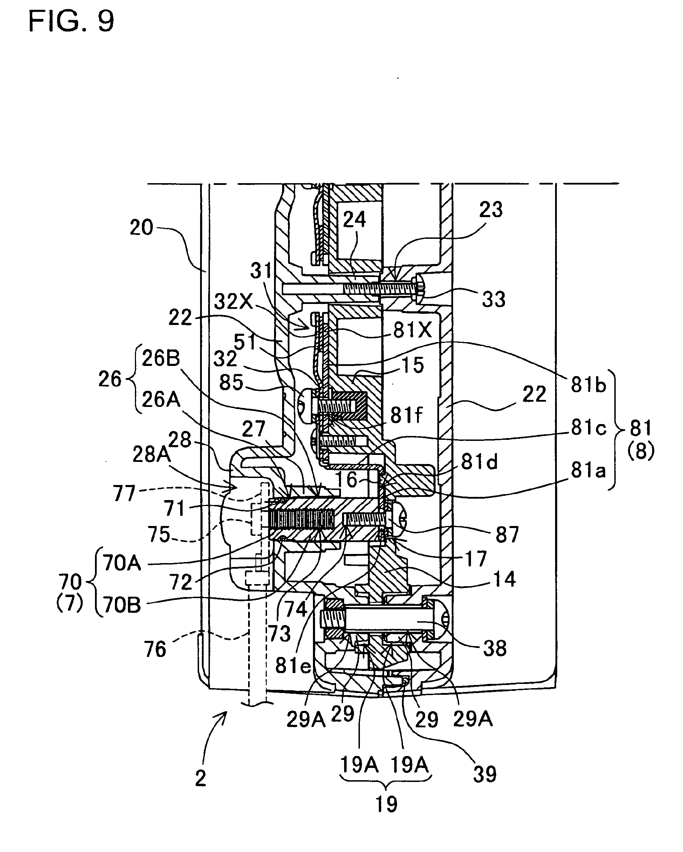

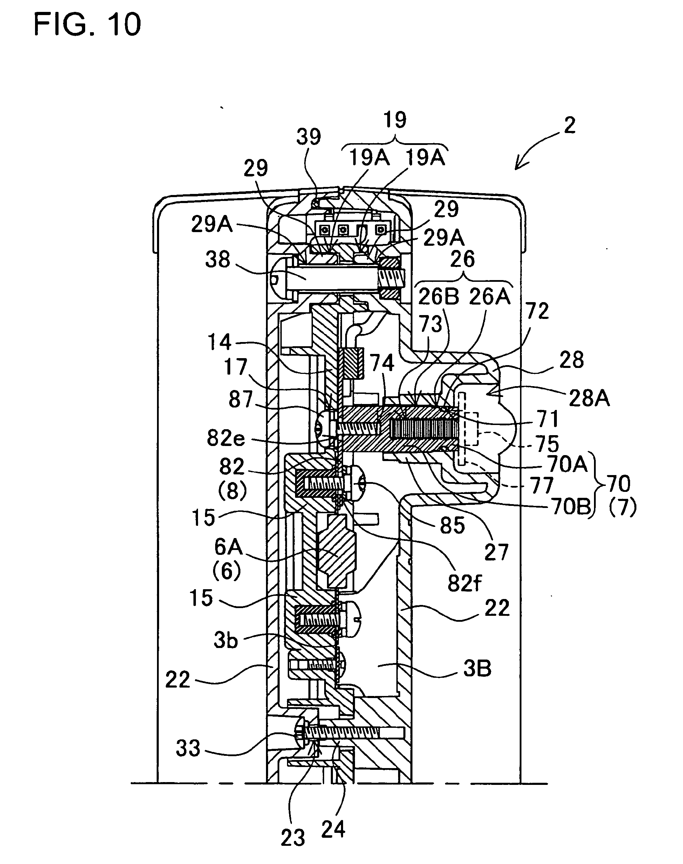

The external case 2 shown in Figs. 2-4 is divided into a first external case 2A and a second external case 2B. The first external case 2A and the second external case 2B are joined together with a gasket 39 intervening along the connecting surfaces of the perimeter walls 21 and fastened with case attachment screws 38 for a water-tight structure. Further, the external case 2 of the figures is provided with attachment extensions 22 projecting from the perimeter walls 21 at both ends to take output terminal lead-plates 8 from the battery assembly 10 to the outside. The external case 2 of Figs. 2-4 is provided with attachment extensions 22 outside the perimeter walls 21 on the short sides of the rectangular external case 2. As shown in Figs. 9 and 10, the attachment extensions 22 of the first external case 2A and the second external case 2B are provided with space to dispose the output terminal lead-plates 8. Further, the first external case 2A and the second external case 2B are molded in shapes that allow the gasket 39 to intervene between the two external case 2 pieces, which have perimeter wall 21 openings with the same shape, to allow screw-fastening and attachment in a water-tight structure. The first external case 2A and the second external case 2B are provided with screw-holes 23 to insert set screws 33 on one side, and bosses 24 to screw in the set screws 33 on the other side. These screw-holes 23 and bosses 24 are positioned at the center of the attachment extensions 22 (refer to Figs. 9 and 10), and along the long-side perimeter walls 21 that have no attachment extensions 22 on the first external case 2A and the second external case 2B (refer to Figs. 3 and 4). The screw-holes 23 for set screw 33 insertion on one side, and the bosses 24 for screw-fastening the set screws 33 on the other side are established protruding from the inside surfaces of the external case 2.

In addition, the external case 2 of Figs. 3 and 4 has case attachment screws 38 to join the first external case 2A and the second external case 2B at the four corners, which are the end regions of each attachment extension 22. The external case 2 is formed with integrated screw bosses 29 at both end regions of each attachment extension 22 to hold the battery assembly 10 in a fixed position. The external case 2 of Figs. 3 and 4 is provided with circular cylindrical screw bosses 29 that protrude from the inside surfaces of the attachment extensions 22. The circular cylindrical screw bosses 29 can be fit into attachment recesses 19A, which are attachment fittings 19 on the battery holder 11 of the battery assembly 10. The centers of the circular cylindrical screw bosses 29 have screw-holes 29A opened to accept case attachment screw 38 insertion (refer to Figs. 9 and 10).

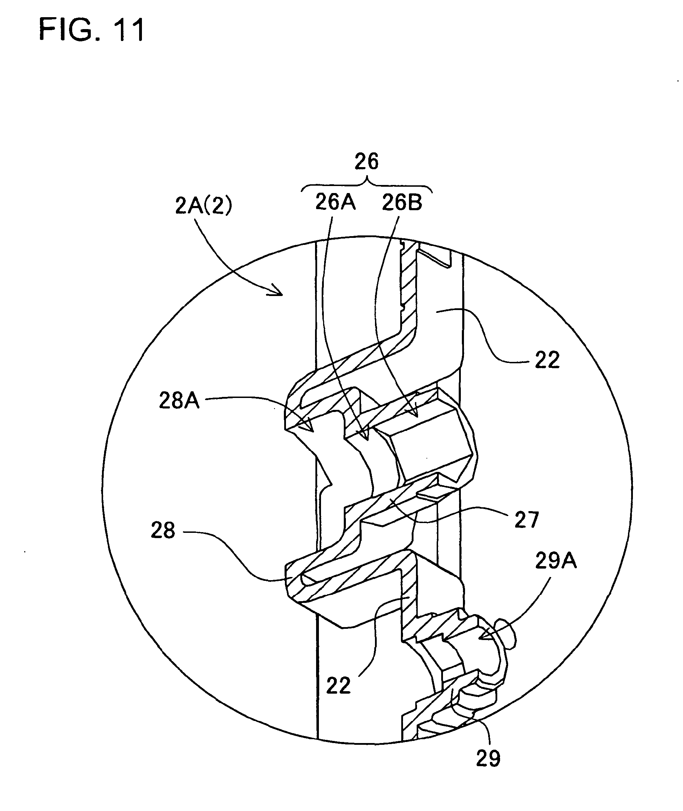

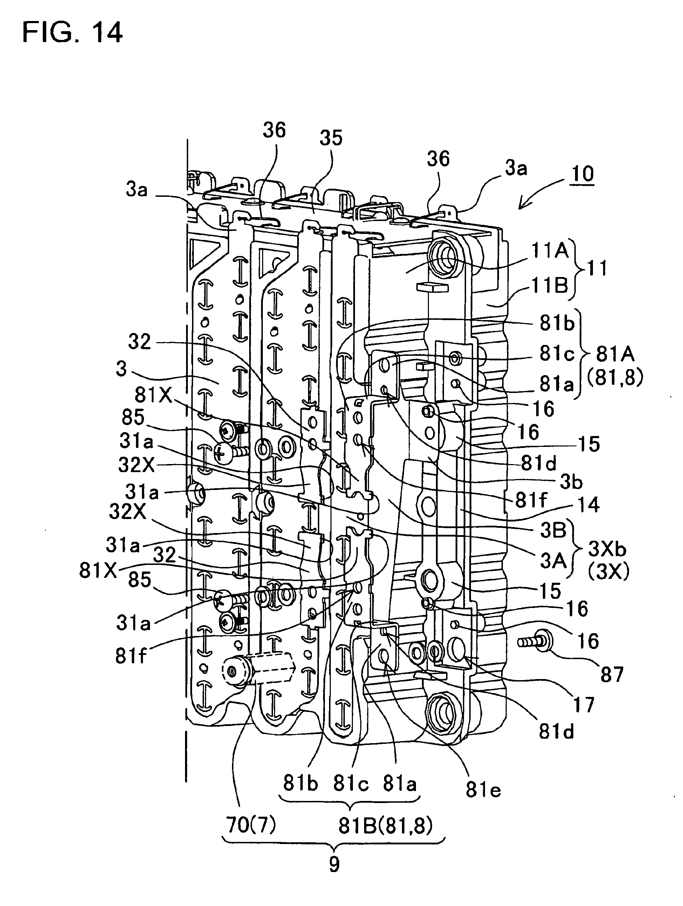

The external case 2 is also provided with through-holes 26 for insertion of the positive and negative output terminals 7. The external case 2 of Fig. 4 is provided with positive and negative output terminal 7 through-holes 26 through the attachment extensions 22 disposed at both ends. As shown in Figs. 11 and 14, metal rods 70, which are the output terminals 7, have circular cylindrical sections 70A that insert into circular cylindrical through-hole 26A sections of the through-holes 26. The through-holes 26 also have non-circular cylindrical through-hole 26B sections for insertion of non-circular cylindrical sections 70B of the metal rods 70 in a manner that prevents rotation. As shown in the external case 2 of Figs. 9-11, projecting cylinders 27 are formed in single-piece construction with the external case 2 in a manner projecting from the outside surfaces into the inside surfaces of the attachment extensions 22. The projecting cylinders 27 lengthen the through-holes 26 that have both circular cylindrical through-hole 26A sections and non-circular cylindrical through-hole 26B sections.

The external case 2 of Figs. 2, 9, and 10 is provided with connecting blocks 28 on the attachment extension 22 surfaces, which protrude from the perimeter walls 21, to establish the projecting cylinders 27. The projecting cylinders 27 are established in the connecting blocks 28, and the circular cylindrical through-holes 26A and non-circular cylindrical through-holes 26B are provided on the inside surfaces of the projecting cylinders 27. Further, the external case 2 of Figs. 2, 9, and 10 is provided with recesses 28A in the upper surfaces of the connecting blocks 28, and the through-holes 26 are opened in those recesses 28A. An external case 2 with output terminal 7 through-holes 26 opened inside recesses 28A in the connecting blocks 26 can dispose the external leads 76 for output terminal 7 electrical connection and set screws 75 screwed into the output terminals 7 at interior positions with respect to the surface plates 20. This can prevent exterior metal pieces from contacting the output terminals 7. In the external case 2 of Figs. 9 and 10, the upper surfaces of the connecting blocks 28 are disposed inward from the surface plates 20, and external lead 76 contact terminals 77 are disposed in the recesses 28A to position them at further interior positions.

### [battery assembly]

Figs. 3-8 show the battery assembly 10. The battery assembly 10 of the figures is provided with a plurality of batteries 1 that can be charged and are disposed next to each other in parallel orientation, a plastic battery holder 11 that disposes the batteries 1 in a plurality of rows and columns, and a plurality of lead-plates 3 weld-attached to electrodes 1A at the ends of each battery 1 disposed in the battery holder 11 to electrically connect adjacent batteries 1.

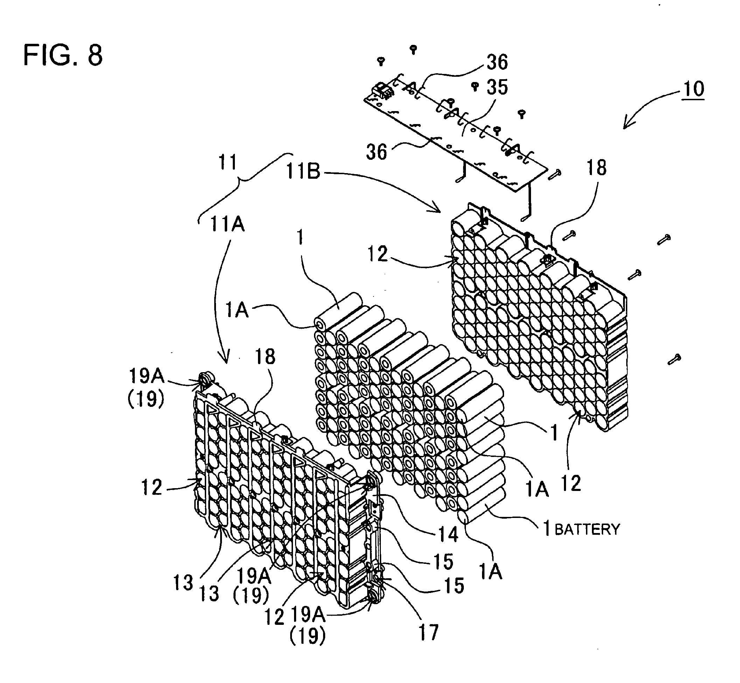

The batteries 1 of Fig. 8 are circular cylindrical batteries. A plurality of batteries 1 are arranged in multiple rows and columns with the electrodes 1A at each end of the batteries 1 positioned in common planes. The battery assembly 10 of Fig. 8 is an array of batteries 1 with eight horizontal rows and fourteen vertical columns. Specifically, one hundred and twelve batteries 1 are arranged in eight rows and fourteen columns. Batteries 1 in adjacent columns are shifted vertically to position batteries 1 in one column midway between batteries 1 in an adjacent column. This allows circular cylindrical batteries 1 to be arrayed in multiple columns in close proximity. However, the battery system of the present invention is not limited to a configuration having the number and arrangement of batteries described above. For example, batteries can also be disposed in a rectangular grid arrangement (with no column shifting).

### [batteries]

The batteries 1 are batteries that can be charged. Circular cylindrical batteries are used as the batteries 1 in the battery pack of the figures, although rectangular batteries and thin-outline batteries can also be used. In the present embodiment, circular cylindrical lithium ion batteries are used as the batteries 1. Lithium ion batteries are suitable for use in a high capacity, high output battery system. This is because lithium ion batteries can achieve high capacity-to-weight and capacity-to-volume ratios. However, the battery system of the present invention is not limited to the use of lithium ion batteries, and rechargeable batteries such as nickel-hydride batteries and nickel-cadmium batteries can also be used.

### [battery holder]

The battery assembly 10 shown in Fig. 8 has batteries 1 inserted in specified positions in battery holder 11 battery loading sections 12. As shown in Fig. 8, the battery holder 11 is formed in a shape that has circular cylindrical battery loading sections 12. The battery loading sections 12 are formed with interior shapes that can accept circular cylindrical battery insertion. The battery holder 11 of the figures is provided with one hundred and twelve battery loading sections 12 to insert batteries 1 in eight rows and fourteen columns. Both ends of the battery loading sections 12 are open.

The battery pack of Fig. 8 has a battery holder 11 that is divided into two pieces in the lengthwise direction of the cylindrical batteries 1 (left and right in the figure). The battery holder 11 is made up of a first battery holder 11A and a second battery holder 11B. The first battery holder 11A and the second battery holder 11 B are formed with both ends of the battery loading sections 12 open to accept circular cylindrical batteries 1. The battery holder 11 is molded with an insulating material such as plastic. A battery holder 11 molded from plastic in a shape establishing battery loading sections 12 can dispose the plurality of batteries 1 in an array of separate compartments that accurately align those batteries 1 in specified positions. Further, by separating the batteries 1 in independent compartments, conditions that induce battery 1 thermal runaway can be avoided. The connected battery holder 11, which is molded as two pieces, exposes the electrodes 1A at the ends of the batteries 1 to the outside from the open ends of the battery loading sections 12. The lead-plates 3 are weld-attached to the exposed electrodes 1A by a technique such as spot-welding or laser-welding. Polycarbonate can be used as the battery holder 11 plastic material. This material has high strength and is not easily dissolved by lithium ion battery electrolyte that could leak from a battery. Conversely, ABS resin is easily dissolved by lithium ion battery electrolyte and its use is undesirable.

The battery holder 11 is provided with recessed regions 13 formed to hold lead-plates 3 in fixed positions at both open ends of the battery loading sections 12. The lead-plates 3 are inserted into the recessed regions 13 and connected to the electrodes 1A at the ends of the batteries 1. Consequently, the recessed regions 13 are positioned to dispose the lead-plates 3 for connection to the battery 1 electrodes 1A.

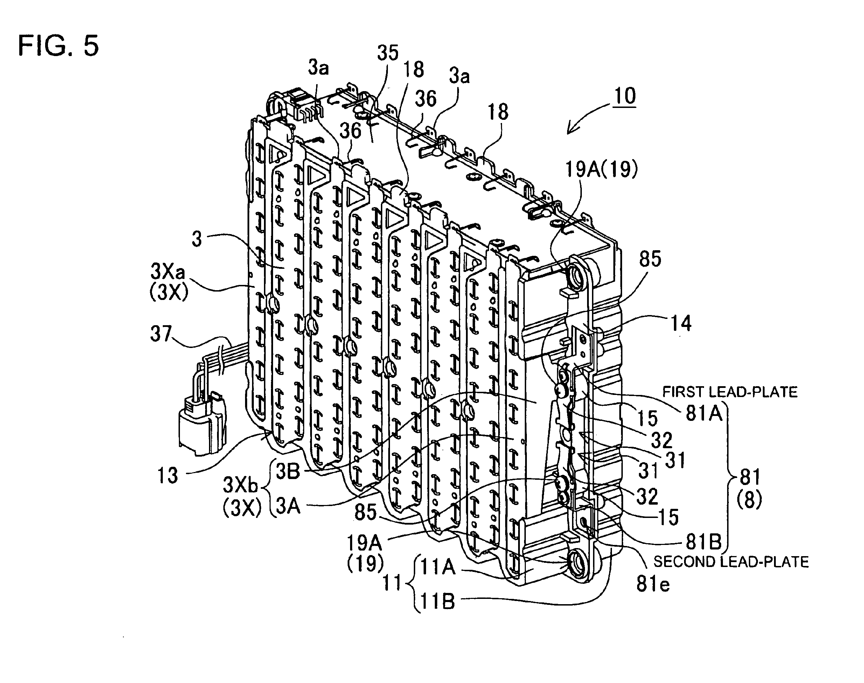

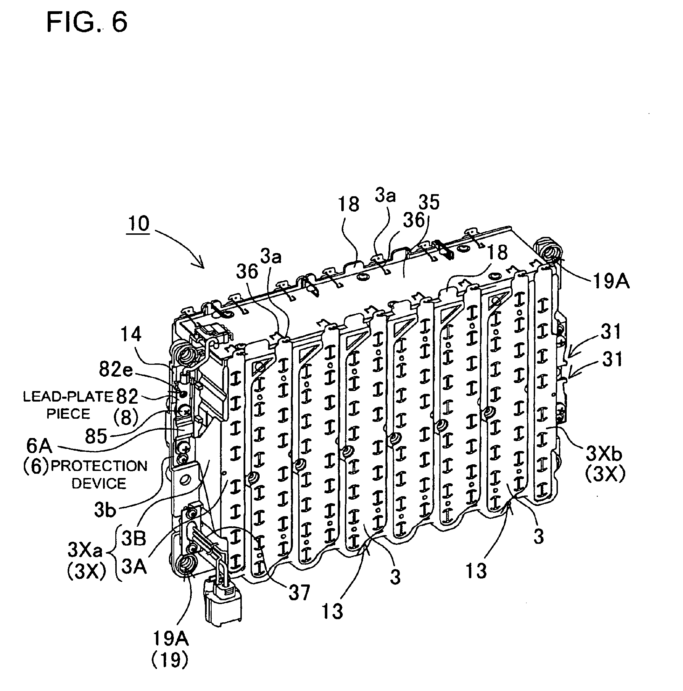

In addition, the first battery holder 11A is provided with attachment plates 14 at both ends (left and right ends of the battery holder 11 of Figs. 5 and 6) for attachment of output terminal lead-plates 8. The attachment plates 14 are disposed in planes parallel to the lead-plates 3 at the center of the narrow direction of the battery holder 11, which is the center of the lengthwise direction of the circular cylindrical batteries 1. The attachment plates 14 are provided with attachment bosses 15 for attaching output terminal lead-plates 8 with set screws 85, and mounting projections 16 for attaching the output terminal lead-plates 8 in specified positions. Further, through-holes 17 are provided for connection screw 87 insertion to attach the output terminals 7 to the output terminal lead-plates 8.

As shown in Figs. 3-6, 9, and 10, both sides and both ends of the attachment plates 14 are also provided with case-mounting pieces 19 to dispose the battery holder 11 in a fixed position inside the external case 2. The case-mounting pieces 19 have case-mounting recesses 19A to mate with the screw bosses 29 of the external case 2, and the interiors are shaped to align and hold the circular cylindrical screw bosses 29 in fixed positions. The case-mounting recesses 19A, which are the case-mounting pieces 19, have through-holes established at their centers to pass the case attachment screws 38. The screw bosses 29 of the first external case 2A and the second external case 2B are inserted into the case-mounting pieces 19 provided on both sides of the battery holder 11 attachment plates 14 to connect the external case 2 in a fixed position. The first external case 2A and the second external case 2B are fastened with case attachment screws 38 to sandwich and hold the battery holder 11 in a fixed position inside the first external case 2A and the second external case 2B. The case attachment screws 38 pass through the first external case 2A, the second external case 2B, and the battery holder 11 to hold them together as a single unit.

### [lead-plates]

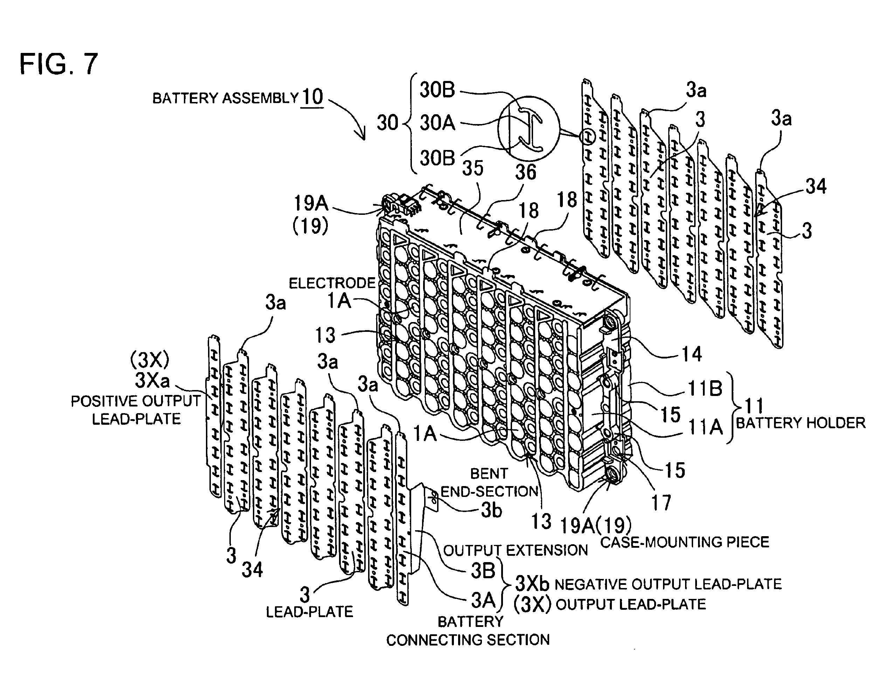

The lead-plates 3 are inserted into the battery holder 11 recessed regions 13 and spot-welded or laser-welded to the battery 1 electrodes 1A to connect adjacent batteries 1 in series and parallel. In the battery assembly 10 of Fig. 7, a plurality of lead-plates 3 is disposed in parallel orientation with an insulating gap 34 established between each lead-plate 3 and weld-attached to the battery 1 electrodes 1A.

The lead-plates 3 are connected to the electrodes 1A at the ends of the batteries 1 to connect adjacent batteries 1 in series and parallel. The lead-plates 3 connect all the batteries 1 in a single column in parallel and connect adjacent columns of batteries 1 in series. The multiple columns of batteries 1 in the battery assembly 10 are connected in series by the lead-plates 3. A positive output lead-plate 3Xa is connected to one end of the battery assembly 10, and a negative output lead-plate 3Xb is connected to the other end.

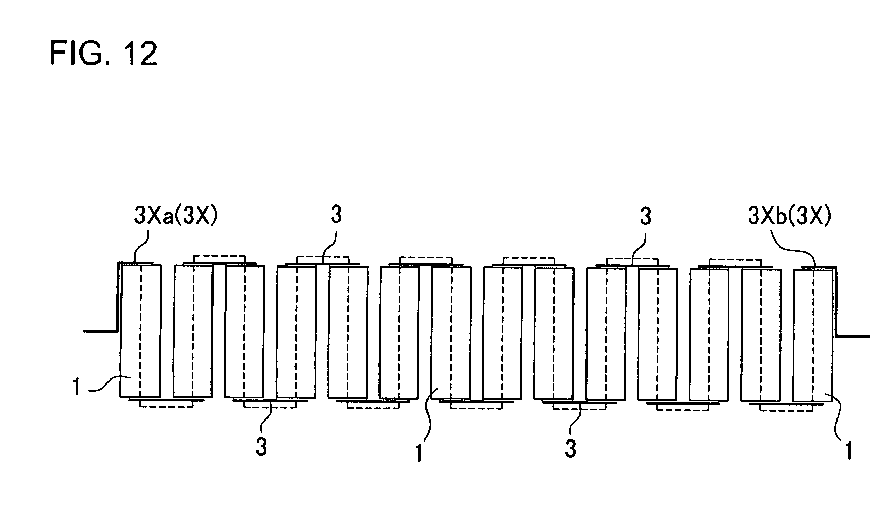

The battery assembly 10 of Fig. 7 has seven lead-plates 3 disposed at one end of the batteries 1 (upper right end in Fig. 7), and each lead-plate 3 has a width that connects two columns of batteries 1. The seven lead-plates 3 connect each column of eight batteries 1 in parallel, and connect two adjacent columns of batteries 1 in series. At the other end of the batteries 1 (lower left end in Fig. 7), six lead-plates 3 with a width that connects two columns of batteries 1 are disposed in the center of the battery assembly 10, and two lead-plates 3 with a width that connects a single column of batteries 1 are disposed at the positive and negative output-ends. Each of the six lead-plates 3 disposed at the center connects eight batteries 1 of a column in parallel, and connects two adjacent columns of batteries 1 in series. The lead-plates 3, which have a width that connects a single column of batteries 1 in parallel, are output lead-plates 3X that connect the positive and negative sides of the batteries 1 to the external outputs 9. As shown in the partially schematic diagram of Fig. 12, the battery assembly 10 described above connects fourteen columns of batteries in series along the zigzag broken line of the figure. Here, output lead-plates 3X, which have a width that connects a single column of batteries 1, are disposed at the positive and negative ends of the battery assembly 10. This battery assembly 10 connects eight batteries 1 in parallel and fourteen batteries 1 in series via the lead-plates 3.

The positive and negative output lead-plates 3X are provided with output extensions 3B that connect to the output terminal lead-plates 8, which are the external outputs. Each output extension 3B is disposed on a side edge of an output lead-plate 3X battery connecting section 3A that connects a column of eight batteries 1 in parallel. Each of the output lead-plates 3X of Figs. 5-7 has an output extension 3B that is bent at a right angle on one edge of the battery connecting section 3A connecting eight batteries 1 in parallel. Each output extension 3B is disposed along the surface of the battery holder 11 in the lengthwise direction of the batteries 1, and the end of each output extension 3B is connected to an output terminal lead-plate 8. In addition, the end of each output extension 3B is bent at a right angle to make surface contact with an output terminal lead-plate 8, and the bent end-section 3b is connected to the output terminal lead-plate 8. Further, the output extensions 3B gradually become wider from the bent end-sections 3b at the output terminal lead-plates 8 towards the battery connecting sections 3A to connect the battery connecting sections 3A with wide output extensions 3B. This type of output lead-plate 3X can connect the batteries 1 to the output terminal lead-plates 8 in a low resistance manner.

The lead-plates 3 are made from sheet-metal with low electrical resistance and superior thermal conductivity. For example, nickel, iron, steel, copper, and copper alloys in sheet-metal form can be plated with a metal such as nickel and used as the lead-plates 3. A sheet-metal thickness that is optimum for weld-attachment, for example, 0.1 mm to 0.3mm sheet-metal can be used as the lead-plates 3. If the lead-plates 3 are too thick or too thin, they cannot be spot-welded or laser-welded to the electrodes 1A at the ends of the batteries 1 with an ideal weld-attach. Since a lead-plate that is too thick requires a large amount of thermal energy for heating and fusing, detrimental effects on the batteries increase. Conversely, a lead-plate that is too thin has high electrical and thermal resistance, and does not have sufficient mechanical strength. Therefore, lead-plate thickness is set to an optimum value considering the amount of current flow and the type of application.

The lead-plates 3 of Fig. 7 are provided with slits 30 in locations that are spot-welded to the battery 1 electrodes 1A to reduce the flow of ineffective welding current. The lead-plates 3 of Fig. 7 are provided with vertical slits 30A, and horizontal slits 30B connected to the vertical slits 30A at the top and bottom the vertical slits 30A. Spot-welding electrodes are pressed onto both sides of a vertical slit 30A to weld-attach the lead-plate 3 on both sides of the vertical slit 30A to an electrode 1A at the end of a battery 1. Lead-plates 3 weld-attached to the battery 1 electrodes 1A connect the batteries 1 in a reliable manner. Further, the lead-plates 3 have extensions 3a established at their upper ends for connection to a circuit board 35. The lead-plate 3 extensions 3a are connected to the circuit board 35 via leads 36.

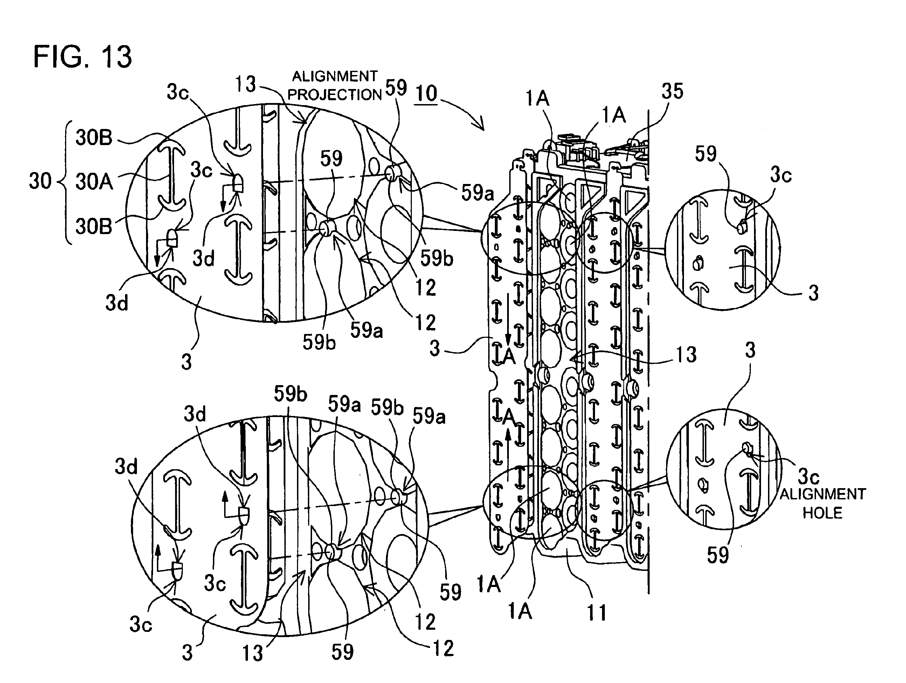

As shown in Fig. 13, the lead-plates 3 are configured to allow temporary attachment in fixed positions on the battery holder 11 during the process step that spot-welds the lead-plates 3 to the electrodes 1A at the ends of the batteries 1. The battery holder 11 of the figure is provided with alignment projections 59 protruding from the recessed regions 13, and these alignment projections 59 mate with the lead-plates 3. Further, the lead-plates 3 have alignment holes 3c in positions corresponding to the alignment projection 59 for insertion of the alignment projections 59. The lead-plates 3 are disposed in fixed positions on the battery holder 11 by connecting the alignment projections 59 protruding from the surfaces of the battery holder 11 into the alignment holes 3c. The battery holder 11 of Fig. 13 has two alignment projections 59 established at both vertical ends of a recessed region 13. The alignment projections 59 are provided in the ends of the recessed regions 13, and are formed in single-piece construction between vertically adjacent battery loading sections 12. The alignment projections 59 of the figure have overall circular cylindrical shapes and are provided with detents 59a cut out of the bottom of one side to insert into, and interlock with lead-plate 3 alignment holes 3c. From a different perspective, the circular cylindrical alignment projections 59 are provided with hooks 59b that protrude beyond the detents 59a from the ends of the alignment projections 59 to interlock with the alignment holes 3c. As shown in Fig. 13, each pair of alignment projections 59 disposed at the upper end of a column have hooks 59b (detents 59a) oriented to face the hooks 59b (detents 59a) at the opposing lower end of each column.

The lead-plates 3 of Fig. 13 are provided with two alignment holes 3c at each upper and lower end. Each alignment hole 3c is opened at an end of the lead-plate 3 and between vertically adjacent slits 30.These alignment holes 3c have a size and shape that can accept insertion of the alignment projections 59. The alignment holes 3c of the figure do not have perfect circular shapes, but rather are cut with a straight side and have a D-shape. The lead-plates of Fig. 13 have a pair of alignment holes 3c at the same end oriented with straight-line sections 3d on the same side as the corresponding alignment projection 59 detents 59a. A lead-plate 3 with alignment holes 3c of this shape is attached to the battery holder 11 by mating the alignment hole 3c straight-line sections 3d with the alignment projection 59 detents 59a to interlock the lead-plate 3 on the alignment projection 59 hooks 59b. To retain the lead-plate 3 with the battery holder 11 alignment projections 59 inserted in the alignment holes 3c in a manner that does not separate, the distance between the straight-line sections 3d of upper and lower alignment hole 3c pairs is made greater than the distance between the front ends of the hooks 59b on corresponding upper and lower alignment projection 59 pairs, and is made less than the distance between opposing surfaces in the detents 59a of the upper and lower alignment projection 59 pairs. For example, as shown by arrows A in Fig. 13, the lead-plate 3 can be warped by applying pressure from above and below towards the center to narrow the distance between the pairs of alignment holes 3c at both ends and insert corresponding alignment projections 59 into each alignment hole 3c. By subsequently returning the lead-plate 3 to its original shape, the straight-line section 3d of each alignment hole 3c can interlock with the detent 59a of each alignment projection 59 to attach the lead-plate 3 to the battery holder 11 in a manner that does not separate. Although the center of the lead-plate 3 is warped to attach it to the battery holder 11 alignment projections 59 in the configuration described above, it is also possible to establish flexible battery holder alignment projections and press the lead-plate onto the battery holder to snap the alignment projections into the alignment holes and attach the lead-plate to the battery holder in a manner that does not separate.

A configuration that temporarily attaches lead-plates 3 to the battery holder 11 in the manner described above can attach a plurality of lead-plates 3 to the battery holder 11 and simultaneously perform spot-welding on both sides of the upright battery holder 11. Consequently, spot-welding can be performed efficiently, reliably, and accurately; and the electrodes 1A at the ends of all the batteries 1 can be connected to lead-plates 3 in an ideal manner.

### [output terminal lead-plates]

The output terminal lead-plates 8 are thick sheet-metal with a lower electrical resistance than the lead-plates 3. For example, the output terminal lead-plates 8 are nickel, iron, steel, copper, or copper sheet-metal plated with a metal such as nickel. The output terminal lead-plates 8 are attached via set screws 85 to the surfaces of the attachment plates 14 provided at both ends of the first battery holder 11A

In Figs. 5 and 14, the output terminal lead-plate 8 mounted on the attachment plate 14 on the right side of the battery holder 11 is a pair of metal lead-plate pieces 81. The lead-plate pieces 81 are a first lead-plate 81A that connects to the output extension 3B of the output lead-plate 3X, and a second lead-plate 81 B that connects to the output terminal 7. The output terminal lead-plate 8 shown in Fig. 14 is the pair of lead-plate pieces 81, which are bent in Z-shapes. Each Z-shaped lead-plate piece 81 is provided with an attachment section 81 a, an upright section 81c, and a connection section 81b. The attachment sections 81 a are provided with mounting holes 81 d that mate with the mounting projections 16 established on the surface of the attachment plate 14. The mounting projections 16 align and insert into the mounting holes 81d to dispose the attachment sections 81 a in fixed positions. Further, the attachment section 81 a of the second lead-plate 81 B is provided with a through-hole 81 e to pass the connection screw 87 that attaches the metal rod 70, which is the output terminal 7. The connection screw 87 is passed through the through-hole 17 in the attachment plate 14, inserted through the through-hole 81e in the attachment section 81 a, and screwed into the screw-hole 74 in the metal rod 70 to attach the output terminal lead-plate 8 to the metal rod 70. The connection sections 81 b are provided with through-holes 81f for insertion of set screws 85 that screw into attachment bosses 15 established in the attachment plate 14. The set screws 85 are inserted through the through-holes 81f and screwed into the attachment bosses 15 to attach the output terminal lead-plates 8 to the attachment plate 14. Further, the connection sections 81 b of the first lead-plate 81A and the second lead-plate 81 B are electrically connected by the service plug 4 to connect the output terminal 7 with the output lead-plate 3X.

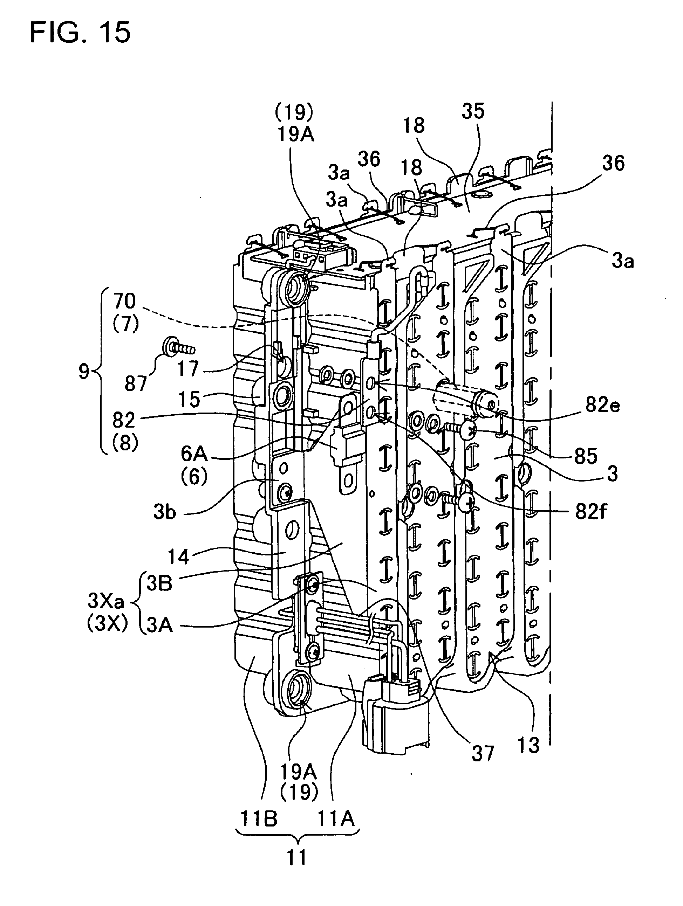

In Figs. 6 and 15, the output terminal lead-plate 8 mounted on the attachment plate 14 on the left side of the battery holder 11 is a single metal lead-plate piece 82. As shown in Figs. 10 and 15, the lead-plate piece 82 is provided with a through-hole 82e to pass the connection screw 87 that attaches the metal rod 70, which is the output terminal 7. The connection screw 87 is passed through the through-hole 17 in the attachment plate 14, inserted through the through-hole 82e in lead-plate piece 82, and screwed into the screw-hole 74 in the metal rod 70 to attach the output terminal lead-plate 8 to the metal rod 70. Further, the lead-plate piece 82 is provided with a through-hole 82f for insertion of a set screw 85 that screws into an attachment boss 15 established in the attachment plate 14. The set screw 85 is inserted through the through-hole 82f and screwed into the attachment boss 15 to attach the output terminal lead-plate 8 to the attachment plate 14. This output terminal lead-plate 8 has one end connected to the output terminal 7, and the other end connected through a protection device 6 to the output lead-plate 3X. The protection device 6 is a fuse 6A that fuses open with excessive current flow. However, the protection device 6 can also be a device that can cut-off excessive current flow such as a circuit breaker, or a positive thermal coefficient (PTC) current limiting device.

### [output terminals]

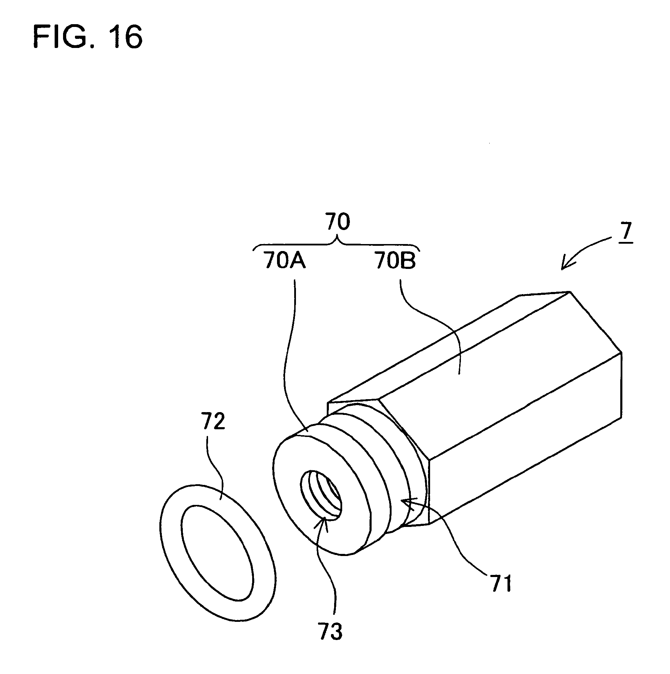

The output terminals 7 are metal rods 70 that are metals such as nickel, iron, steel, copper, or copper plated with a metal such as nickel and processed into long thin metal rod shapes. Each output terminal 7 metal rod 70 is made up of a circular cylindrical section 70A that has a circular or elliptical cylindrical shape, and a non-circular cylindrical section 70B that has a non-circular cylindrical shape. The metal rod 70 of Fig. 16 has a circular cylindrical section 70A front end with a non-circular cylindrical section 70B remaining region that has a polygonal cylindrical shape that is a hexagonal cylindrical shape. The circular cylindrical section of the metal rod does not necessarily have to be a circular cylindrical shape, and can be an elliptical cylindrical shape as well. Further, the non-circular cylindrical section does not necessarily have to be a polygonal cylindrical shape, and it can be also be a shape such as an elliptical cylindrical shape. In addition, the non-circular cylindrical section 70B of an output terminal 7 metal rod 70 has a maximum outline (equivalent outside diameter) that is larger than the maximum outline (outside diameter) of the circular cylindrical section 70A. The metal rod 70 of Fig. 16 has a circular cylindrical section 70A with a diameter that is smaller that the diameter of an inscribed circle in the polygonal cylindrical non-circular cylindrical section 70B.

Each output terminal 7 metal rod 70 is provided with a gasket groove 71, and an O-ring 72 is disposed in that gasket groove 71. As shown in Figs. 9 and 10, with the circular cylindrical section 70A of each metal rod 70 inserted in a circular cylindrical through-hole 26A, each O-ring 72 is disposed in a pressure-fit manner between the circular cylindrical section 70A and the circular cylindrical through-hole 26A. This closes the gap between each circular cylindrical section 70A and circular cylindrical through-hole 26A in a water-tight configuration. The outside diameter of each circular cylindrical section 70A is smaller than the inside diameter of each circular cylindrical through-hole 26A, and a very small gap is established between the circular cylindrical section 70A and the circular cylindrical through-hole 26A. For example, the gap between the circular cylindrical section 70A and the circular cylindrical through-hole 26A is 0.1 mm to 0.5mm, and this gap is closed-off in a water-tight configuration by the O-ring 72 gasket. The thickness of the O-ring 72 is greater than the distance from the bottom of the gasket groove 71 to the inside surface of the circular cylindrical through-hole 26A. The O-ring 71 is squeezed between the bottom of the gasket groove 71 and the inside surface of the circular cylindrical through-hole 26A, and this closes-off the gap between the circular cylindrical section 70A and the circular cylindrical through-hole 26A in a water-tight configuration. Further, the outside of each non-circular cylindrical section 70B is slightly smaller than the inside of each non-circular cylindrical through-hole 26B to allow smooth insertion of each metal rod 70 into a circular cylindrical through-hole 26A.

The output terminal 7 metal rods 70 are provided with screw-holes 73, 74 at both ends. As shown in Figs. 9 and 10, external lead 76 contact terminals 77 are connected by set screws 75 in the screw-holes 73 at the front ends of the metal rods 70. Output terminal 7 metal rods 70 are attached to the output terminal lead-plates 8 by connection screws 87 in the screw-holes 74 at the rear ends of the metal rods 70.

The metal rods 70, which are the output terminals 7, have an overall length that allows attachment of the rear ends to the output terminal lead-plates 8, and allows exposure of the front ends from the surface of the external case 2. Further, the length of the metal rods 70 allows protrusion of the front ends from the bottoms of the recesses 28A in the connecting blocks 28 established outside the perimeter walls 21 of the external case 2. An output terminal 7, which has a front end that protrudes out from the bottom of a connecting block 28 recess 28A, allows reliable attachment of an external lead 76 contact terminal 77. This is because an external lead 76 contact terminal 77 can contact the surface of the front end of the output terminal 7 metal rod 70 for solid attachment via a set screw 75 without touching the bottom of the recess 28A.

### [circuit board]

The circuit board 35 that is connected to each lead-plate 3 has electronic parts mounted to implement battery 1 charging control circuitry, protection circuitry, and remaining battery capacity computation circuitry. In addition, the circuit board 35 acquires and computes various data such as remaining capacity, abnormal conditions, discharge suspension (commands), and charging suspension (commands). These data are transmitted via lead wires 37 to the electrical equipment that is supplied with power from the battery system (for example, an electric powered two-wheeled vehicle). The electrical equipment performs various control operations based on these data. In the external case 2 shown in Fig. 2, the attachment extension 22 on one side (the left side in Fig. 2) is provided with a lead wire opening 22A to pass the lead wires 37. The lead wires 37 are run to the outside through the lead wire opening 22A.

As shown in Figs. 5-8, the circuit board 35 is attached to the upper surface of the battery holder 11. The battery holder 11 is provided with a plurality of alignment ribs 18, which are formed in single-piece construction with the battery holder 11, around the circuit board 35 to align the circuit board 35 in a specified position. The circuit board 35 is guided into a specified position surrounded by the alignment ribs 18 on the upper surface of the battery holder 11, and fastened in that position by screws.

The protection circuitry mounted on the circuit board 35 is circuitry such as a circuit to detect battery 1 over-charging and over-discharging and to control current, and a circuit to detect battery over-charging and cut-off current. To detect battery 1 over-charging and over-discharging, the protection circuitry is provided with a voltage detection circuit (not illustrated) that detects battery 1 voltage. The voltage detection circuit detects the voltage of the batteries 1 via the lead-plates 3 and prevents over-charging and over-discharging.

### [service plug]

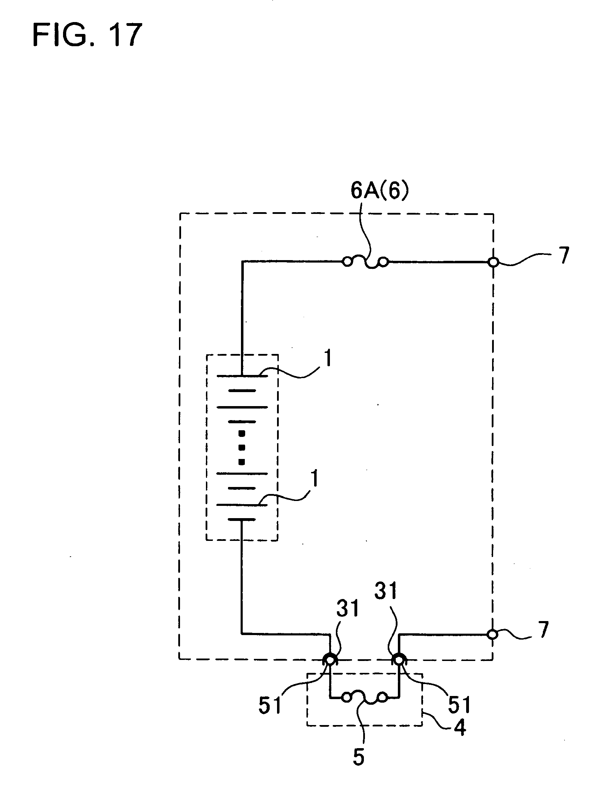

As shown in the circuit diagram of Fig. 17, the service plug 4 is connected on one side of the output in series with the plurality of batteries 1. When the service plug 4 is inserted in the external case 2, the series-connected batteries 1 are connected via the fuse 5 housed in the service plug 4. When the service plug 4 is removed from the external case 2, one end of the connected batteries 1 is opened and no voltage is established across the positive and negative output terminals 7. The service plug 4 is removed until the battery system is installed in an electric vehicle. The service plug 4 is also removed when maintenance work is performed to prevent output of high voltage from the output terminals 7. The service plug 4 is inserted in the external case 2 when the battery system is installed for use in an electric vehicle.

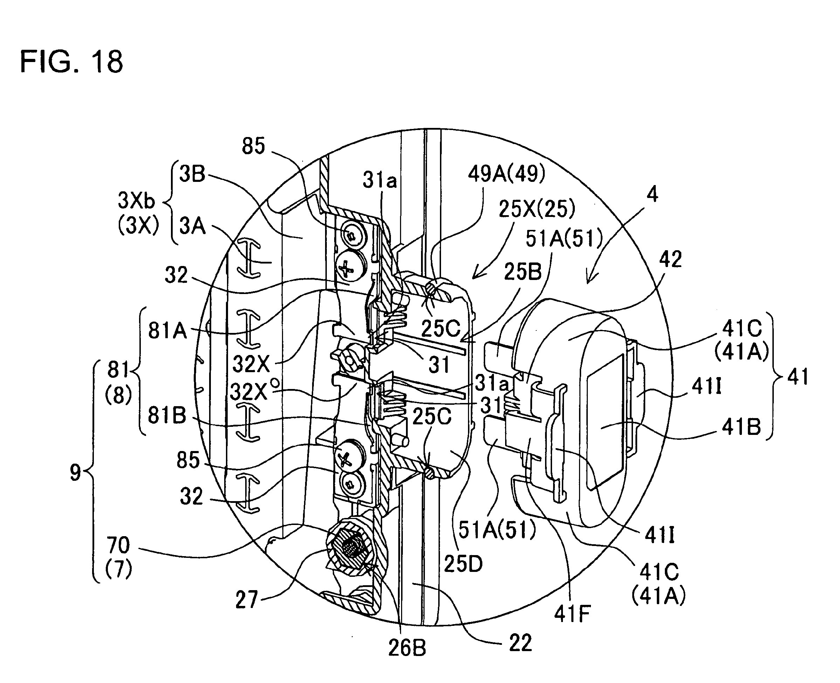

The service plug 4 is shown in Figs. 18-22. The service plug 4 is provided with a plastic plug case 40 that connects to the external case 2 in a detachable manner, a fuse 5 housed inside the plug case 40, and a pair of connecting terminals 51 connected to the fuse 5. The plug case 40 is provided with a cover casing 41 having a cylindrical region 41A that mates with the plug connecting section 25, and an inner casing 42 attached to the inside of the cover casing 41 cylindrical region 41A to hold the fuse 5.

The cover casing 41 is formed from plastic as a single-piece having a long narrow cover cap 41 B with semicircular end regions, and cylindrical side-walls 41 C established around the cover cap 41 B. The cover cap 41 B is provided with connecting bosses 41 D at both ends to connect the inner casing 42. The connecting bosses 41 D have circular cylindrical shapes and project vertically from the inside surface of the cover cap 41 B. The ends of the connecting bosses 41 D are provided with screw-holes 41 E to screw in set screws 43.

The cover casing 41 is provided with locking hooks 41 F on both sides of the cylindrical side-walls 41 C. The cylindrical side-walls 41 C are formed in a cylindrical shape with smooth inside surfaces, and are formed with tapered inside surfaces that become wider towards the open end of the cover casing 41. The tapered cylindrical side-walls 41 C can smoothly connect with the plug connecting section 25 on the external case 2 and make a more reliable water-tight connection via the gasket 49. This is because when the plug connecting section 25 is inserted into the cylindrical side-walls 41 C, the interior of the cylindrical side-walls 41 C gradually becomes smaller with insertion, and compression of the gasket 49 gradually increases. However, the cylindrical side-walls can be formed with a straight cylindrical inside shape as well.

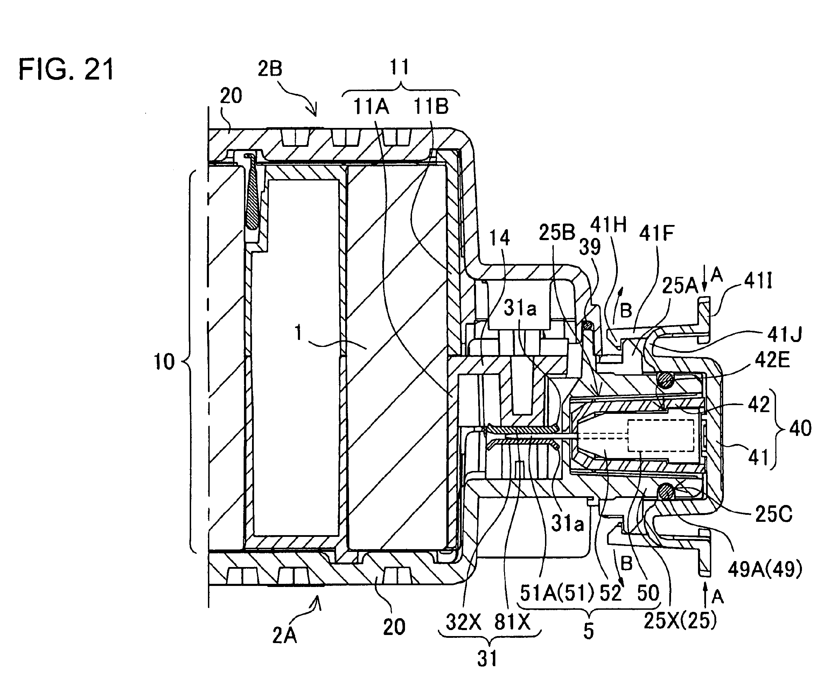

The locking hooks 41 F lock into locking catches 25A established on the external case 2 to reliably attach the service plug 4 to the external case 2. The locking hooks 41 F connect to the cylindrical side-walls 41 C through a pair of flexible arms 41 G. The flexible arms 41 G are formed in J-shapes that dispose the locking hooks 41 F in a manner that allows the locking hooks 41 F to flexibly angle outward from the cylindrical side-walls 41 C. Further, the insides of the front ends of the locking hooks 41 F are provided with hook projections 41 H that lock into the locking catches 25A on the external case 2. The back ends of the locking hooks 41 F are provided with release tabs 41I to move the locking hooks 41 F outward and detach the service plug 4 from the external case 2. When the release tabs 41I are squeezed towards the cylindrical side-walls 41 C, the locking hooks 41 F are moved in a direction to release the front end hook projections 41 H from the external case 2 locking catches 25A. By squeezing the release tabs 41I established on both sides of the cover casing 41 in the direction of the arrows A in Fig. 21, and pressing both release tabs 41I towards the cylindrical side-walls 41 C, the locking hooks 41 F on both sides move in the direction shown by the arrows B in Fig. 21 allowing the service plug 4 to be easily detached from the external case 2. When the release tabs 41I are not squeezed together, the hook projections 41 H on the ends of the locking hooks 41 F are latched into the external case 2 locking catches 25A, and the service plug 4 is solidly attached to the external case 2.

The inner casing 42 is molded as a single-piece having rectangular cylindrical enclosure walls 42C to contain a fuse 5 inside, and a base plate 42B that connects the base of the enclosure walls 42C. Connecting holes 42D are established outside both ends of the inner casing 42 enclosure walls 42C to pass the connecting bosses 41 D provided on the cover casing 41. The connecting bosses 41 D are passed through the connecting holes 42D and set screws 43 are screwed into the connecting bosses 41 D to connect the inner casing 42 in a given location in the cover casing 41. The outline of the inner casing 42, or more specifically the outline of the enclosure walls 42C, is formed in a shape that can fit into the plug recess 25B provided in the external case 2 plug connecting section 25.

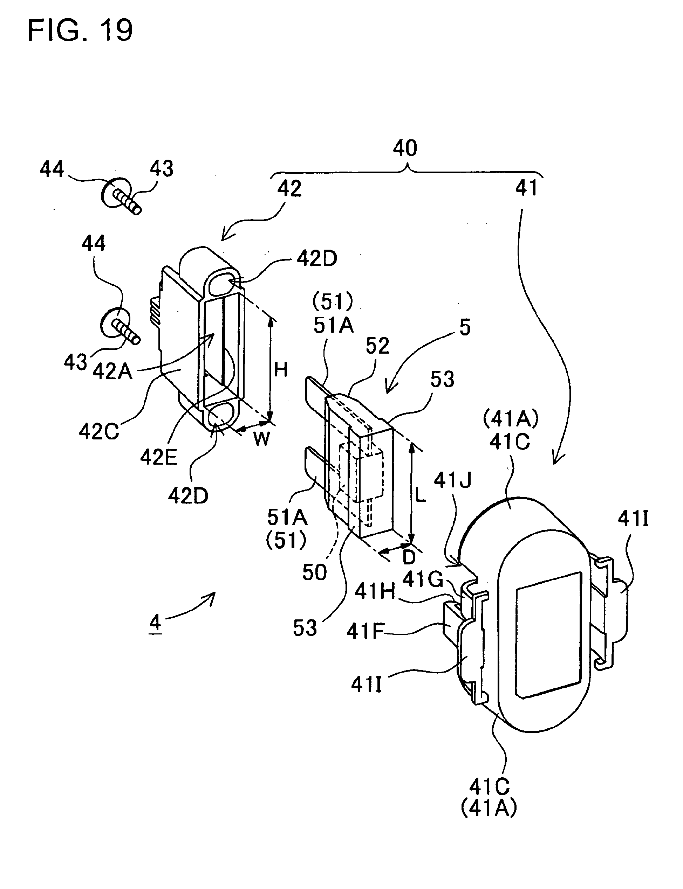

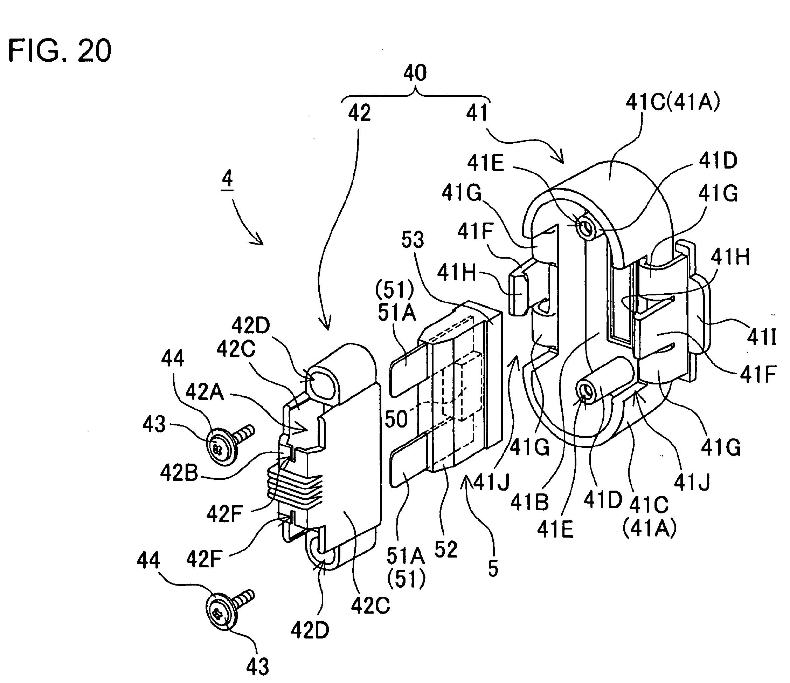

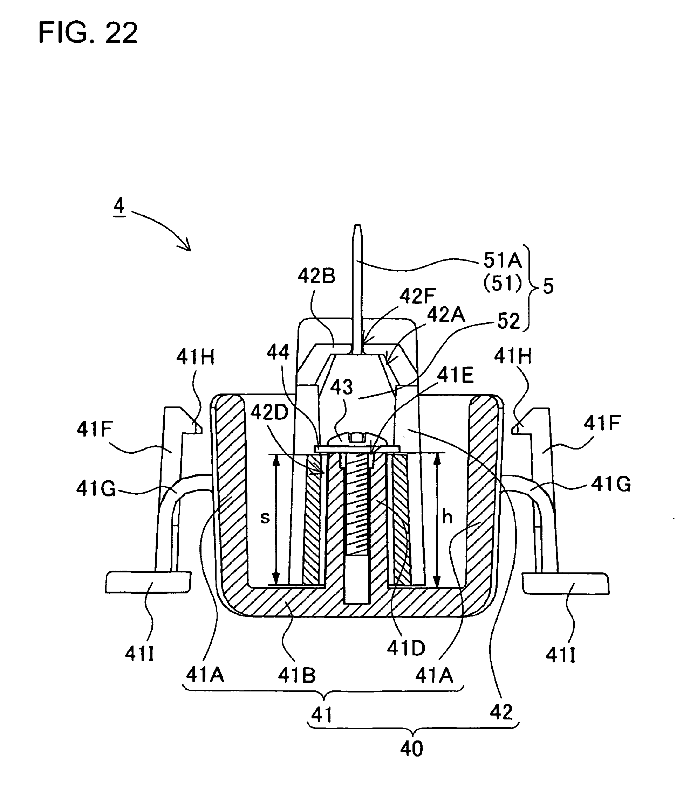

In addition, the inner casing 42 is connected to the cover casing 41 in a floating structure that connects the fuse 5 connecting terminals 51 to the plug case 40 in a floating configuration. Here, the insides of the inner casing 42 connecting holes 42D are made larger than the outside diameters of the connecting bosses 41 D to join the inner casing 42 to the cover casing 41 in a floating configuration. The inner casing 42 of Figs. 19 and 20 has long connecting holes 42D shaped as elongated circles, and the connecting bosses 41 D inserted through the connecting holes 42D can move inside those elongated circular shaped holes. This allows relative movement of the inner casing 42 with respect to the cover casing 41. For the inner casing 42 to move smoothly inside the cover casing 41, the connecting bosses 41 D must move smoothly inside the connecting holes 42D. Therefore, the height (h) of the connecting bosses 41 D of the plug case 40 shown in Fig. 22 is made somewhat longer than the axial length (s) of the connecting holes 42D, and the set screws 43 are screwed into the connecting bosses 41 D through wide-brimmed washers 44. The outline of the wide-brimmed washers 44 is made larger than the inside of the connecting holes 42D to prevent the connecting holes 42D at both ends of the inner casing 42 from coming off the connecting bosses 41 D.

The long dimension of the elongated circular connecting holes 42D of the inner casing 42 of the figures is established in the direction of the plug blade 51A thickness. The inside diameter of the connecting holes 42D in the direction of the plug blade 51A width, which is perpendicular to the thickness direction, is made essentially equal to the outside diameter of the connecting bosses 41 D, or is made slightly larger than the outside diameter of the connecting bosses 41 D. The inside dimension of the connecting holes 42D is made greater than the outside diameter of the connecting bosses 41 D in the thickness direction of the plug blades 51 A, and the connecting bosses 41 D inserted through the connecting holes 42D can move relative to the connecting holes 42D in the thickness direction of the plug blades 51A. This structure establishes a floating configuration that allows the connecting terminals 51 to move inside the plug case 40 in the thickness direction of the plug blades 51A. The inside dimension of the connecting holes 42D in the elongated direction can be made, for example, 1.05 to 3 times the outside diameter of the connecting bosses 41 D, and preferably 1.1 to 2 times the outside diameter of the connecting bosses 41 D for an ideal connecting terminal 51 floating configuration. Further, a floating configuration can also be established that allows the connecting terminals to move in the width direction of the plug blades. Here, the inside dimension of the connecting holes is made greater than the outside diameter of the connecting bosses in the width direction of the plug blades. This establishes a floating configuration that allows relative movement of the connecting bosses inside the connecting holes in the width direction of the plug blades. A floating configuration that allows movement of the connecting terminals 51 in the thickness direction of the plug blades can connect the connecting terminals 51 in the receptacles 31 in an ideal state. Further, a floating configuration that allows movement of the connecting terminals 51 in both the thickness and width directions of the plug blades can also connect the connecting terminals 51 in the receptacles 31 in an ideal state while allowing connection in an ideal water-tight manner. In the battery system of the present invention, a floating configuration that allows movement of the connecting terminals 51 in the plug blade 51A thickness direction only can connect the connecting terminals 51 in the receptacles 31 in an ideal manner with no excessive effort. Therefore, a floating configuration that allows movement only in the thickness direction can be employed.

The inner casing 42 is provided with a fuse 5 compartment 42A established by the base plate 42B and the enclosure walls 42C. The depth of the fuse compartment 42C is large enough to hold the fuse 5 inside. As shown in Fig. 19, the inside width (W) of the fuse compartment 42A, which is the narrow distance between the pair of parallel opposing enclosure walls 42C, is made essentially equal to the thickness (D) of the fuse 5, or is made slightly larger. In addition, the inside length (H) of long side of the fuse compartment 42A is made essentially equal to the long dimension (L) of the fuse 5, or is made slightly larger to allow the fuse 5 to be held in a fixed position inside the fuse compartment 42C. The inside of the inner casing 42 shown in Figs. 19 and 21 is provided with stepped recesses 42E at the open end of the enclosure walls 42C. The stepped recesses 42E accept insertion of the detachment ridges 53 established on both sides of the fuse 5.

As shown in Fig. 20, both sides of the base plate 42B are provided with insertion regions 42F to enable smooth insertion and retraction of the connecting terminal 51 plug blades 51A connected to the fuse 5. Since the service plug 4 connecting terminals 51 of the figures are metal-plate plug blades 51A, the insertion regions 42F are slit-shaped. Since the service plug 4 has a pair of plug blades 51A disposed in a common plane, the pair of slit-shaped insertion regions 42F is disposed in a straight-line. The pair of insertion regions 42F disposed in a straight-line is a pair of slits long enough to align the inside sections of the pair of plug blades 51A while guiding opposing outside sections to project outside. The width of the slit-shaped insertion regions 42F, which is perpendicular to the long dimension of the slits, is made essentially equal to the thickness of the connecting terminal 51 plug blades 51A, or is made slightly larger to dispose the connecting terminal 51 plug blades 51A in specified positions inside the inner casing 42. Further, the distance between the slit-shaped insertion regions 42F is essentially equal to the distance between connecting terminal 51 plug blades 51A. This disposes the connecting terminals 51 inside the inner casing 42 in a manner that does not shift in the direction of the blade width. However, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits is made essentially equal to the lateral width of the connecting terminals to allow insertion of the connecting terminals in a manner that does not shift laterally (in the width direction).

The fuse 5 is provided with a fuse element 50 that has connecting terminals 51 connected at both ends, and a fuse holder 52 that retains the fuse element 50. The fuse element 50 is a device that fuses open with excessive current. The fuse element 50 has a specified fusing current set lower than that of the previously described protection device 6 fuse 6A. If excessive current flows in a battery system of this configuration, the fuse element 50 in the service plug 4 will fuse open to cut-off current before the protection device 6 fuse 6A can fuse open. Consequently, current can be cut-off without fusing open the protection device 6 fuse 6A. A fuse 5 that has fused open can be replaced by exchanging the service plug 4 for one having a new fuse. This type of fuse 5 is generally an off-the-shelf commercially available item.

The fuse holder 52 is made of plastic and contains a fuse element 50 inside. The plug blades 51A of the connecting terminals 51 are connected to both ends of the fuse element 50 and insertion molded in fixed positions in the fuse holder 52. The connecting terminal 51 plug blades 51A are metal plates held in the fuse holder 52 with the pair of plug blades 51A in a common plane. The fuse holder 52 of the fuse 5 is housed in the inner casing 42 fuse compartment 42A with the connecting terminal 51 plug blades 51A inserted through the slit-shaped insertion regions 42F to project to the outside.

The service plug 4 described above connects the inner casing 42, which houses the fuse 5, to the cover casing 41 in a floating configuration that allows the inner casing 42 to move with respect to the cover casing 41. This connects the connecting terminals 51 in a floating configuration in the plug case 40. However, although not illustrated, the connecting terminals can also be connected in a floating configuration in the plug case by housing the fuse in a floating configuration in the inner casing.

In this type of floating configuration, the fuse can be housed inside the inner casing fuse compartment in a floating manner. The depth of the fuse compartment is made slightly larger than the length of the fuse in the direction of insertion to allow the fuse to move freely inside. In addition, the inside width (W) of the fuse compartment, which is the narrow distance between the pair of parallel opposing enclosure walls, is made larger than the thickness (D) of the fuse. This holds the connecting terminal plug blades, which are connected to the fuse, in a floating configuration that allows movement in the direction of the plug blade thickness. Further, the inside length (H) of long side of the fuse compartment enclosure walls can be made longer than the long dimension (L) of the fuse to establish a floating configuration that allows the connecting terminals to move in the lateral width direction of the plug blades, which is perpendicular to the thickness direction. A floating configuration that allows movement of the connecting terminals in the thickness direction of the plug blades can connect the connecting terminals in the receptacles in an ideal state. Further, a floating configuration that allows movement of the connecting terminals in both the thickness and width directions of the plug blades can also connect the connecting terminals in the receptacles in an ideal state while allowing connection in an ideal water-tight manner. In this battery system, since a floating configuration that allows movement of the connecting terminals in the plug blade thickness direction only can connect the connecting terminals and receptacles in an ideal manner with no excessive effort, a floating configuration allowing movement only in the thickness direction can be adopted.

Further, the slit-shaped insertion regions provided on both sides of the inner casing base plate can be made wider than the thickness of the connecting terminal plug blades to allow movement in the direction of plug blade thickness. The distance between the slit-shaped insertion regions can also be made shorter than the distance between the pair of connecting terminals to allow movement of the connecting terminals in the lateral width direction of the plug blades. Further, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits can be made longer the lateral width of the connecting terminals to allow the connecting terminals to move laterally in the lengthwise direction of the slits. In this type of floating configuration, the fuse is housed in a floating configuration inside the inner casing fuse compartment. The connecting holes at both ends of the inner casing are connected to the cover casing connecting bosses in a manner that does not allow relative movement. This attaches the inner casing in a fixed position in the cover casing.

### [plug connecting section]

The external case 2 of Fig. 18 has a plug connecting section 25 provided with a projecting region 25X that projects out from the surface of the external case 2. The plug connecting section 25 projecting region 25X has a gasket 49 disposed around its entire perimeter. The plug connecting section 25 projecting region 25X is provided with a gasket groove 25C around its perimeter to dispose the gasket 49. An O-ring 49A gasket 49 is disposed in the gasket groove 25C. The O-ring 49A gasket 49 protrudes out from the surface of the projecting region 25X and is resiliently compressed by the inside surface of the service plug 4 cylindrical region 41A to connect the service plug 4 in a water-tight configuration. The gasket 49 makes tight contact with the inside of the cylindrical side-walls 41 C, which form the service plug 4 cylindrical region 41A, to connect the service plug 4 in a water-tight manner. The service plug 4 shown in Fig. 20 is provided with cut-outs 41 J on both sides of the cylindrical side-walls 41 C, and the locking hooks 41 F are established in those cut-outs 41 J. As shown in Fig. 21, the gasket 49 is inserted further into the cylindrical side-walls 41 C than the position of the cut-outs 41 J to connect the cylindrical region 41A in a water-tight configuration. Specifically, the gasket groove 25C is positioned to insert the gasket 49 further inside the cylindrical side-walls 41 than the location of the cut-outs 41 J. The gasket 49 is sandwiched between the inside surface of the service plug 4 cylindrical region 41A and the outside surface of the plug connecting section 25 projecting region 25X to join the service plug 4 to the external case 2 in a water-tight configuration.

The plug connecting section 25 is provided with locking catches 25A that project from both sides to mate with the service plug 4 locking hooks 41 F. The locking catches 25A are established in positions that can interlock with the hook projections 41 H on the ends of the locking hooks 41 F when the service plug 4 is connected in a fixed position. This connects the service plug 4 to the external case 2 in a manner that does not unintentionally come apart.

The inside of the plug connecting section 25 is provided with a plug recess 25B for insertion of the service plug 4 inner casing 42. This plug connecting section 25 is provided with connecting walls 25D, and the plug recess 25B is established inside the connecting walls 25D. The gasket groove 25C is established on the outside surface of the connecting walls 25D, and the O-ring 49A gasket 49 is disposed in that gasket groove 25C. The inside of the connecting walls 25D is shaped to accept insertion of the inner casing 42 of the service plug 4. The connecting walls 25D are formed in a shape that allows insertion between the cover casing 41 cylindrical side-walls 41 C and the inner casing 42 enclosure walls 42C. The service plug 4 inner casing 42 is inserted into the plug recess 25B in the plug connecting section 25, and the connecting walls 25D are inserted into the service plug 4 cylindrical region 41A to connect the service plug 4 in a fixed position. With the service plug 4 in the connected position, the locking hooks 41 F interlock with the locking catches 25A to connect the service plug 4 in a manner that does not disconnect unintentionally.

Further, the external case 2 has a pair of receptacles 31 mounted in a position to accept insertion of the service plug 4 connecting terminals 51 when the service plug 4 is connected to the plug connecting section 25. The receptacles 31 of Figs. 5, 14 and 18 are made up of output terminal lead-plate 8 pieces and flexible metal plates 32. As shown in Fig. 21, the connecting terminals 51 are inserted between the output terminal lead-plate 8 pieces and the flexible metal plates 32 of the receptacles 31. The output terminal lead-plate 8 is made up of the first lead-plate 81A, which is a lead-plate piece 81 connected to the output-side of the batteries 1, and the second lead-plate 81 B, which is a lead-plate piece 81 connected to an output terminal 7. The service plug 4 connects the first lead-plate 81A and the second lead-plate 81 B to connect the output terminal 7 to the output-side of the batteries 1. The front ends of the first lead-plate 81 A and the second lead-plate 81 B are separated by a specified distance, and contact regions 81X that form the contacts of the receptacles 31 are disposed in a common plane and in a straight-line. The back ends of the flexible metal plates 32 are attached to the output terminal lead-plate 8 pieces 81 to form flexible contacts 32X at the front ends. The gap between the flexible metal plate 32 flexible contacts 32X and the output terminal lead-plate 8 contact regions 81X is made smaller than the thickness of the connecting terminals 51. This forms a structure in which the flexible contacts 32X press the inserted connecting terminals 51 resiliently against the contact regions 81 X to electrically connect the receptacles 31 to the connecting terminals 51.

In addition, the receptacles 31 shown in Figs. 14, 18, and 21 are provided with arcing projections 31a on the connecting terminal 51 insertion-side. The arcing projections 31 a of the figures project from the connecting terminal 51 insertion-sides of the ends of the output terminal lead-plate 8 contact regions 81X and the opposing flexible metal plate 32 flexible contacts 32X. Each pair of opposing arcing projections 31 a are inclined and taper to a wider gap towards the insertion-side of the connecting terminals 51. This allows the connecting terminal 51 plug blades 51A to smoothly insert into the wider gap. In this type of structure with arcing projections 31a established on the receptacles 31, the insertion ends of the connecting terminal 51 plug blades 51 A first contact the arcing projections 31 a when the service plug 4 is plugged in for electrical connection. As a result, electrical arcing is confined to contact regions between the arcing projections 31a and the tips of the connecting terminal 51 plug blades 51A. Therefore, dirt generated from carbonized material and surface roughness due to arcing result only at those initial contact regions. In particular, the width of the arcing projections 31 a on the receptacles 31 in the figures is made narrower than the connecting terminal 51 plug blades 51A. This makes it easier for arcing to occur between the opposing arcing projections 31a and the tips of the inserted connecting terminal 51 plug blades 51A. In this manner, dirt and roughness generated by arcing during connecting terminal 51 insertion are limited to regions at the tips of the connecting terminals 51 and receptacles 31. This maintains the central electrical connecting surfaces of the connecting terminals 51 and the receptacles 31 in a clean, smooth condition. Consequently, with the connecting terminals 51 inserted between the flexible contacts 32X and contact regions 81X of the receptacles 31, the connecting terminals 51 and receptacles 31 can make stable contact with clean surfaces for reliable low resistance electrical connection.

The battery system described above is assembled in the following manner.
(1) As shown in Fig. 8, a plurality of batteries 1 are inserted with prescribed orientation (polarity) into the battery holder 11. The batteries 1 of the figures are inserted in the same direction (polarity) in vertical columns, and in alternating reverse directions (polarities) in lateral left-to-right rows. After loading all the batteries 1 in the battery holder 11 battery loading sections 12, the pair of battery holder 11 pieces are fastened together.
(2) As shown in Fig. 7, the circuit board 35 is mounted on top of the battery holder 11. The circuit board 35 is aligned inside the alignment ribs 18 on the upper surface of the battery holder 11 and attached via screws.
(3) The lead-plates 3 are positioned inside the recessed regions 13 of the battery holder 11. Alignment projections 59 established in battery holder 11 recessed regions 13 are inserted into alignment holes 3c at both ends of each lead-plate 3 to temporarily attach each lead-plate 3 in a fixed position on the battery holder 11.
(4) The lead-plates 3 are weld-attached to the electrodes 1A at the ends of each battery 1. The lead-plates 3 are weld-attached to the battery 1 electrodes 1A exposed from the open ends of the battery holder 11 battery loading sections 12 by a technique such as spot-welding or laser-welding. Adjacent lead-plates 3 are disposed in columns separated by insulating gaps 34 to avoid contact. Lead-plate 3 extensions 3a are connected to the circuit board 35 via leads 36.
(5) As shown in Figs. 14 and 15, output terminal lead-plates 8 are mounted on the attachment plates 14 at both ends of the battery holder 11, and the output terminal lead-plates 8 are connected to the output lead-plates 3X.
(6) Positive and negative output terminal 7 metal rods 70 are attached to the positive and negative output terminal lead-plates 8 mounted on the attachment plates 14. Here, the metal rods 70 are attached while aligning them for insertion through the external case 2 through-holes 26 in the following step. The previous steps assemble the battery assembly 10.
(7) The battery assembly 10 is inserted into the first external case 2A. At this time, the output terminal 7 metal rods 70 are inserted through the through-holes 26 in the first external case 2A. The rear ends of the positive and negative output terminals 7 are attached to the output terminal lead-plates 8 and the front ends are exposed outside the surface of the external case 2.
(8) The first external case 2A and second external case 2A are joined together. A gasket 39 is sandwiched between the connecting surfaces at the perimeter walls 21 of the first external case 2A and the second external case 2B, and the external case 2 is fastened together in a water-tight manner with case attachment screws 38.

The battery system of the present invention is optimally suited for outdoor electric powered vehicle applications such as an electric motor bike, electric bicycle, hybrid car, or electric vehicle. The battery system is also optimally suited for use as a power supply for various electrical equipment that require high power.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

The present application is based on Application No. 2010-015524 filed in Japan on January 27, 2010.

### LABELS

- 1: BATTERY
- 1A: ELECTRODE
- 2: EXTERNAL CASE
- 2A: FIRST EXTERNAL CASE
- 2B: SECOND EXTERNAL CASE
- 3: LEAD-PLATE
- 3X: OUTPUT LEAD-PLATE
- 3Xa: POSITIVE OUTPUT LEAD-PLATE
- 3Xb: NEGATIVE OUTPUT LEAD-PLATE
- 3A: BATTERY CONNECTING SECTION
- 3B: OUTPUT EXTENSION
- 3a: LEAD-PLATE EXTENSIONS
- 3b: BENT END-SECTION
- 3c: ALIGNMENT HOLE
- 3d: STRAIGHT-LINE SECTION
- 4: SERVICE PLUG
- 5: FUSE
- 6: PROTECTION DEVICE
- 6A: FUSE
- 7: OUTPUT TERMINAL
- 8: OUTPUT TERMINAL LEAD-PLATE
- 9: EXTERNAL OUTPUT
- 10: BATTERY ASSEMBLY
- 11: BATTERY HOLDER
- 11A: FIRST BATTERY HOLDER
- 11B: SECOND BATTERY HOLDER
- 12: BATTERY LOADING SECTION
- 13: RECESSED REGION
- 14: ATTACHMENT PLATE
- 15: ATTACHMENT BOSS
- 16: MOUNTING PROJECTION
- 17: THROUGH-HOLE
- 18: ALIGNMENT RIB
- 19: CASE-MOUNTING PIECE
- 19A: CASE-MOUNTING RECESS
- 20: SURFACE PLATE
- 21: PERIMETER WALL
- 22: ATTACHMENT EXTENSION
- 22A: LEAD WIRE OPENING
- 23: SCREW-HOLE
- 24: BOSS
- 25: PLUG CONNECTING SECTION
- 25X: PROJECTING REGION
- 25A: LOCKING CATCH
- 25B: PLUG RECESS
- 25C: GASKET GROOVE
- 25D: CONNECTING WALLS
- 26: THROUGH-HOLES
- 26A: CIRCULAR CYLINDRICAL THROUGH-HOLE
- 26B: NON-CIRCULAR CYLINDRICAL THROUGH-HOLE
- 27: PROJECTING CYLINDERS
- 28: CONNECTING BLOCK
- 28A: RECESS
- 29: SCREW BOSS
- 29A: SCREW-HOLE
- 30: SLIT
- 30A: VERTICAL SLIT
- 30B: HORIZONTAL SLIT
- 31: RECEPTACLE
- 31a: ARCING PROJECTION
- 32: FLEXIBLE METAL PLATE
- 32X: FLEXIBLE CONTACT
- 33: SET SCREW
- 34: INSULATING GAP
- 35: CIRCUIT BOARD
- 36: LEAD
- 37: LEAD WIRES
- 38: CASE ATTACHMENT SCREW
- 39: GASKET
- 40: PLUG CASE
- 41: COVER CASING
- 41A: CYLINDRICAL REGION
- 41B: COVER CAP
- 41C: CYLINDRICAL SIDE-WALLS
- 41D: CONNECTING BOSS
- 41E: SCREW-HOLE
- 41F: LOCKING HOOK
- 41G: FLEXIBLE ARM
- 41H: HOOK PROJECTION
- 41I: RELEASE TAB
- 41J: CUT-OUT
- 42: INNER CASING
- 42A: FUSE COMPARTMENT
- 42B: BASE PLATE
- 42C: ENCLOSURE WALLS
- 42D: CONNECTING HOLE
- 42E: STEPPED RECESS
- 42F: INSERTION REGION
- 43: SET SCREW
- 44: WIDE-BRIMMED WASHER
- 49: GASKET
- 49A: O-RING
- 50: FUSE ELEMENT
- 51: CONNECTING TERMINAL
- 51A: PLUG BLADE
- 52: FUSE HOLDER
- 53: DETACHMENT RIDGE
- 59: ALIGNMENT PROJECTION
- 59a: DETENT
- 59b: HOOK
- 70: METAL ROD
- 70A: CIRCULAR CYLINDRICAL SECTION
- 70B: NON-CIRCULAR CYLINDRICAL SECTION
- 71: GASKET GROOVE
- 72: O-RING
- 73: SCREW-HOLE
- 74: SCREW-HOLE
- 75: SET SCREW
- 76: EXTERNAL LEAD
- 77: CONTACT TERMINAL
- 81: LEAD-PLATE PIECE
- 81A: FIRST LEAD-PLATE
- 81B: SECOND LEAD-PLATE
- 81X: CONTACT REGION
- 81a: ATTACHMENT SECTION
- 81b: CONNECTION SECTION
- 81c: UPRIGHT SECTION
- 81d: MOUNTING HOLE
- 81e: THROUGH-HOLE
- 81f: THROUGH-HOLE
- 82: LEAD-PLATE PIECE
- 82e: THROUGH-HOLE
- 82f: THROUGH-HOLE
- 85: SET SCREW
- 87: CONNECTION SCREW
- 113: LEAD-PLATE
- 113X: OUTPUT LEAD-PLATE
- 115: CIRCUIT BOARD
- 116: OUTPUT LEAD

## Claims

1. A battery system housing a battery assembly (10) disposing in fixed positions a plurality of batteries (1) that can be charged, the battery assembly (10) comprising:
a plurality of batteries (1) that can be charged and have electrodes (1A) at their ends;
a battery holder (11) that disposes the plurality of batteries (1) in multiple rows and columns;
a plurality of lead-plates (3) connected to the electrodes (1A) at the ends of batteries (1) disposed in fixed positions by the battery holder (11) to connect adjacent batteries (1) in series and parallel; and
external outputs (9) connected to output lead-plates (3X) that are lead-plates (3) disposed at the output-sides of the batteries (1) to take battery (1) output outside the battery system,
wherein the battery holder (11) disposes the plurality of batteries (1) in parallel orientation in multiple rows and columns and exposes the electrodes (1A) at both ends of the batteries (1) in positions that allow connection to the lead-plates (3), wherein
the plurality of lead-plates (3) connect to electrodes (1A) at the ends of the batteries (1), the lead-plates (3) connect batteries (1) in the same column in parallel and adjacent columns in series, the plurality of batteries (1) disposed in multiple columns have those columns connected in series, a positive output lead-plate (3Xa) is disposed at one end of the battery assembly (10), and a negative output lead-plate (3Xb) is connected at the other end of the battery assembly (10), **characterized in that**
the battery assembly (10) has a positive-side external output (9) disposed at the end with the positive output lead-plate (3Xa), and a negative-side external output (9) disposed at the end with the negative output lead-plate (3Xb), and
Each output lead-plate (3X) is provided with an output extension (3B) to connect with an external output (9), the output extension (3B) is attached to a side edge of a battery connecting section (3A) that connects a plurality of batteries (1) in parallel, and the output extension (3B) is connected to the external output (9).

2. The battery system as cited in claim 1 wherein the external outputs (9) are provided with output terminal lead-plates (8) mounted on the battery holder (11), and output terminals (7) attached to the output terminal lead-plates (8) with one part exposed outside the external case (2).

3. The battery system as cited in claim 2 wherein the output terminals (7) are metal rods (70) attached to the output terminal lead-plates (8).

4. The battery system as cited in claim 2 wherein an output terminal lead-plate (8) is made up of a first lead-plate (81A) connected to an output lead-plate (3X) output extension (3B) and a second lead-plate (81 B) connected to an output terminal (7), and the first lead-plate (81A) and the second lead-plate (81B) are connected via a service plug (4).

5. The battery system as cited in claim 2 wherein an output terminal lead-plate (8) is made up of a first lead-plate (81A) connected to an output lead-plate (3X) output extension (3B) and a second lead-plate (81 B) connected to an output terminal (7), and the first lead-plate (81A) and the second lead-plate (81 B) are connected via a protection device.

6. The battery system as cited in claim 2 wherein an output terminal lead-plate (8) is provided with a lead-plate piece (82) that connects an output lead-plate (3X) output extension (3B) to an output terminal (7), and the output extension (3B) and the lead-plate piece (82) are connected by a protection device (6).

7. The battery system as cited in claim 2 wherein an output terminal lead-plate (8) is provided with-a lead-plate piece (82) that connects an output lead-plate (3X) output extension (3B) to an output terminal (7), and the output extension (3B) and the lead-plate piece (82) are connected by a service plug.

8. The battery system as cited in claim 1 wherein the output lead-plate (3X) output extensions (3B) are tapered to gradually become wider from bent end-sections (3b) at the external outputs (9) towards the battery connecting sections (3A).

9. The battery system as cited in claim 1 wherein the output lead-plate (3X) output extensions (3B) have shapes that are bent with respect to the battery connecting sections (3A) in a direction parallel with the lengthwise direction of the batteries (1).

10. The battery system as cited in claim 1 wherein the output lead-plate (3X) output extensions (3B) are tapered to gradually become wider from bent end-sections (3b) at the external outputs (9) towards the battery connecting sections (3A); and the output extensions (3B) have shapes that are bent with respect to the battery connecting sections (3A) in a direction parallel with the lengthwise direction of the batteries (1).

11. The battery system as cited in claim 10 wherein each output lead-plate (3X) is provided with an output extension (3B) that is bent at a right angle on one side edge of the battery connecting section (3A) connecting a plurality of batteries (1) in parallel.

12. The battery system as cited in claim 8 wherein the end of each output extension (3B) has a bent end-section (3b) that forms a right angle with the output extension (3B), and each bent end-section (3b) is connected to an output terminal lead-plate (8).

13. The battery system as cited in claim 1 wherein the output terminals (7) are exposed outside the surface of the external case (2).

14. The battery system as cited in claim 1 wherein the external case (2) is divided into a first external case (2A) and a second external case (2B), the first external case (2A) and the second external case (2B) are fastened together with case attachment screws (38), the external case (2) is provided with screw bosses (29) to attach the battery holder (11) in a fixed position, the battery holder (11) has case-mounting pieces (19) to insert the external case (2) screw bosses (29) in specified positions, the screw bosses (29) are inserted into the case-mounting pieces (19) to connect the battery holder (11) in a fixed position in the external case (2), and the first external case (2A) and the second external case (2B) are fastened with case attachment screws (38) to hold the battery holder (11) in a fixed position inside the external case (2).

15. The battery system as cited in claim 1 wherein the battery holder (11) is provided with alignment projections (59) to attach the lead-plates (3), the lead-plates (3) have alignment holes (3c) for insertion of the alignment projections (59), and the lead-plates (3) can be disposed in fixed positions on the battery holder (11) by inserting the alignment projections (59) in the alignment holes (3c).

16. The battery system as cited in claim 15 wherein the battery holder (11) is provided with a plurality of columns of recessed regions (13) formed to hold the lead-plates (3) in separate fixed positions at both open ends of the battery loading sections (12), the lead-plates (3) are inserted into the recessed regions (13) and connected to the electrodes (1A) at the ends of the batteries (1), and the recessed regions (13) dispose the plurality of lead-plates (3) in fixed positions.

17. The battery system as cited in claim 1 wherein both ends of the battery holder (11A) are provided with attachment plates (14) to mount the output terminal lead-plates (8); the attachment plates (14) are disposed in planes parallel to the lead-plates (3) at the center of the lengthwise direction of the batteries (1); and the attachment plates (14) are provided with attachment bosses (15) for attaching output terminal lead-plates (8) with set screws (85), and mounting projections (16) for attaching the output terminal lead-plates (8) in specified positions.

18. The battery system as cited in claim 1 that is a battery system installed on-board an electrically powered vehicle.

19. The battery system as cited in claim 1 wherein the external case (2) has a pair of surface plates (20) with rectangular outlines and perimeter walls (21) connecting the rectangular surface plates (20), the battery assembly (10) is housed in the external case (2) in a manner that disposes the batteries (1) perpendicular to the surface plates (20), the electrodes (1A) at the ends of all the batteries (1) are disposed opposite the inside surfaces of the surface plates (20), and the lead-plates (3) are disposed between the batteries (1) and the surface plates (20).

## Patentansprüche

1. Batteriesystem, das eine Batterieanordnung (10) aufnimmt, die an festen Positionen eine Vielzahl von Batterien (1) anordnet, die geladen werden können, wobei die Batterieanordnung (10) umfasst:
eine Vielzahl von Batterien, die geladen werden können und Elektroden (1A) an ihren Enden aufweisen;
eine Batteriehalterung (11), welche die Vielzahl von Batterien in mehreren Reihen und Spalten anordnet;
eine Vielzahl von Leitungsplatten (3), die mit den Elektroden (1A) an den Enden der Batterien (1) verbunden sind, die durch die Batteriehalterung (11) an festen Positionen angeordnet sind, um angrenzende Batterien (1) in Reihe und parallel zu verbinden; und
externe Ausgänge (9), die mit Ausgangs-Leitungsplatten (3X) verbunden sind, die Leitungsplatten (3) sind, die an den Ausgangsseiten der Batterien (1) angeordnet sind, um die Ausgabe der Batterie (1) außerhalb des Batteriesystems aufzunehmen, wobei die Batteriehalterung (11) die Vielzahl von Batterien (1) in paralleler Orientierung in mehreren Reihen und Spalten anordnet und die Elektroden (1A) an beiden Enden der Batterien (1) an Positionen freilegt, die eine Verbindung mit den Leitungsplatten (3) erlauben, wobei
die Vielzahl von Leitungsplatten (3) mit den Elektroden (1A) an den Enden der Batterien (1) verbunden sind, wobei die Leitungsplatten (3) Batterien (1) in der selben Spalte parallel verbinden und in benachbarten Spalten in Reihe verbinden, wobei die Vielzahl von Batterien (1), die in mehreren Spalten angeordnet sind, solche Spalten in Reihe verbunden aufweisen, wobei eine positive Ausgangs-Leitungsplatte (3Xa) an einem Ende der Batterieanordnung (10) angeordnet ist und eine negative Ausgangs-Leitungsplatte (3Xb) mit dem anderen Ende der Batterieanordnung (10) verbunden ist, **dadurch gekennzeichnet, dass**
die Batterieanordnung (10) einen positiv-seitigen externen Ausgang (9) aufweist, der an dem Ende mit der positiven Ausgangs-Leitungsplatte (3Xa) angeordnet ist, und einen negativseitigen externen Ausgang (9) aufweist, der an dem Ende mit der negativen Ausgangs-Leitungsplatte (3Xb) angeordnet ist, und
jede Ausgangs-Leitungsplatte (3X) mit einer Ausgangs-Erweiterung (3B) versehen ist, um mit einem externen Ausgang (9) verbunden zu sein, wobei die Ausgangs-Erweiterung (3B) an einer Seitenkante eines Batterieverbindungsabschnitts (3A) befestigt ist, der eine Vielzahl von Batterien (1) parallel verbindet, und wobei die Ausgangs-Erweiterung (3B) mit dem externen Ausgang (9) verbunden ist.

2. Batteriesystem gemäß Anspruch 1, wobei die externen Ausgänge (9) mit Ausgangsanschluss-Leitungsplatten (8), die auf der Batteriehalterung (11) montiert sind, und mit Ausgangsanschlüssen (7) versehen sind, die mit einem Teil, das außerhalb des äußeren Gehäuses (2) freiliegt, an den Ausgangsanschluss-Leitungsplatten (8) befestigt sind.

3. Batteriesystem gemäß Anspruch 2, wobei die Ausgangsanschlüsse (7) Metallstäbe (70) sind, die an den Ausgangsanschluss-Leitungsplatten (8) befestigt sind.

4. Batteriesystem gemäß Anspruch 2, wobei eine Ausgangsanschluss-Leitungsplatte (8) aus einer ersten Leitungsplatte (81A), die mit einer Ausgangs-Erweiterung (3B) einer Ausgangs-Leitungsplatte (3X) verbunden ist, und einer zweiten Leitungsplatte (81B) hergestellt ist, die mit einem Ausgangsanschluss (7) verbunden ist, und wobei die erste Leitungsplatte (81A) und die zweite Leitungsplatte (81B) über einen Servicestecker (4) verbunden sind.

5. Batteriesystem gemäß Anspruch 2, wobei eine Ausgangsanschluss-Leitungsplatte (8) aus einer ersten Leitungsplatte (81A), die mit einer Ausgangs-Erweiterung (3B) einer Ausgangs-Leitungsplatte (3X) verbunden ist, und einer zweiten Leitungsplatte (81B) hergestellt ist, die mit einem Ausgangsanschluss (7) verbunden ist, und wobei die erste Leitungsplatte (81A) und die zweite Leitungsplatte (81B) über eine Schutzeinrichtung verbunden sind.

6. Batteriesystem gemäß Anspruch 2, wobei eine Ausgangsanschluss-Leitungsplatte (8) mit einem Leitungsplatten-Stück (82) versehen ist, dass eine Ausgangs-Erweiterung (3B) einer Ausgangs-Leitungsplatte (3X) mit einem Ausgangsanschluss (7) verbindet, und wobei die Ausgangs-Erweiterung (3B) und das Leitungsplatten-Stück (82) durch eine Schutzeinrichtung (6) verbunden sind.

7. Batteriesystem gemäß Anspruch 2, wobei eine Ausgangsanschluss-Leitungsplatte (8) mit einem Leitungsplatten-Stück (82) versehen ist, dass eine Ausgangs-Erweiterung (3B) einer Ausgangs-Leitungsplatte (3X) mit einem Ausgangsanschluss (7) verbindet, und wobei die Ausgangs-Erweiterung (3B) und das Leitungsplatten-Stück (82) über einen Servicestecker verbunden sind.

8. Batteriesystem gemäß Anspruch 1, wobei die Ausgangs-Erweiterungen (3B) der Ausgangs-Leitungsplatte (3X) angeschrägt sind, um von gebogenen Endabschnitten (3B) an den externen Ausgängen (9) hin zu den Batterieverbindungsabschnitten (3A) graduell weiter zu werden.

9. Batteriesystem gemäß Anspruch 1, wobei die Ausgangs-Erweiterungen (3B) der Ausgangs-Leitungsplatte (3X) Formen aufweisen, die in Bezug auf die Batterieverbindungsabschnitte (3A) in einer Richtung parallel zu der Längsrichtung der Batterien (1) gebogen sind.

10. Batteriesystem gemäß Anspruch 1, wobei die Ausgangs-Erweiterungen (3B) der Ausgangs-Leitungsplatte (3X) angeschrägt sind, um von gebogenen Endabschnitten (3B) an den externen Ausgängen (9) hin zu den Batterieverbindungsabschnitten (3A) graduell weiter zu werden; und die Ausgangs-Erweiterungen (3B) Formen haben, die in Bezug auf die Batterieverbindungsabschnitte (3A) in einer Richtung parallel zu der Längsrichtung der Batterien (1) gebogen sind.

11. Batteriesystem gemäß Anspruch 10, wobei jede Ausgangs-Leitungsplatte (3X) mit einer Ausgangs-Erweiterung (3B) versehen ist, die mit einem rechten Winkel an einer Seitenkante des Batterieverbindungsabschnitts (3A) gebogen ist, der eine Vielzahl von Batterien (1) parallel verbindet.

12. Batteriesystem gemäß Anspruch 8, wobei das Ende von jeder Ausgangs-Erweiterung (3B) einen gebogenen Endabschnitt (3b) aufweist, der einen rechten Winkel mit der Ausgangs-Erweiterung (3B) bildet, und wobei jeder gebogene Endabschnitt (3b) mit einer Ausgangsanschluss-Leitungsplatte (8) verbunden ist.

13. Batteriesystem gemäß Anspruch 1, wobei die Ausgangsanschlüsse (7) außerhalb der Oberfläche des äußeren Gehäuses (2) freiliegen.

14. Batteriesystem gemäß Anspruch 1, wobei das äußere Gehäuse (2) in ein erstes äußeres Gehäuse (2A) und ein zweites äußeres Gehäuse (2B) geteilt ist, wobei das erste äußere Gehäuse (2A) und das zweite äußere Gehäuse (2B) miteinander mit Gehäusebefestigungsschrauben (38) befestigt sind, wobei das äußere Gehäuse (2) mit Schraubenansätzen (29) versehen ist, um die Batteriehalterung (11) in einer festen Position zu befestigen, wobei die Batteriehalterung (11) Gehäusemontage-Stücke (19) aufweist, um die Schraubenansätze (29) des äußeren Gehäuses (2) in bestimmte Positionen einzuführen, wobei die Schraubenansätze (29) in die Gehäusemontage-Stücke (19) eingeführt werden, um die Batteriehalterung (11) in einer festen Position in dem äußeren Gehäuse (2) zu verbinden, und wobei das erste äußere Gehäuse (2A) und das zweite äußere Gehäuse (2B) mit den Gehäusebefestigungsschrauben (38) befestigt sind, um die Batteriehalterung (11) in einer festen Position innerhalb des äußeren Gehäuses (2) zu halten.

15. Batteriesystem gemäß Anspruch 1, wobei die Batteriehalterung (11) mit Ausrichtungsvorsprüngen (59) versehen ist, um die Leitungsplatten (3) zu befestigen, wobei die Leitungsplatten (3) Ausrichtungslöcher (3C) zur Einführung der Ausrichtungsvorsprünge (59) aufweisen, und wobei die Leitungsplatten (3) in festen Positionen auf der Batteriehalterung (11) angeordnet werden können, indem die Ausrichtungsvorsprünge (59) in die Ausrichtungslöcher (3C) eingeführt werden.

16. Batteriesystem gemäß Anspruch 15, wobei die Batteriehalterung (11) mit einer Vielzahl von Spalten ausgenommener Bereiche (13) versehen ist, die geformt sind, um die Leitungsplatten (3) in separaten festen Positionen an beiden offenen Enden der Batterieladeabschnitte (12) zu halten, wobei die Leitungsplatten (3) in die ausgenommenen Bereiche (13) eingeführt und mit den Elektroden (1A) an den Enden der Batterien (1) verbundne werden, und wobei die ausgenommenen Bereiche (13) die Vielzahl von Leitungsplatten (3) in festen Positionen anordnen.

17. Batteriesystem gemäß Anspruch 1, wobei beide Enden der Batteriehalterung (11A) mit Befestigungsplatten (14) versehen sind, um die Ausgangsanschluss-Leitungsplatten (8) zu montieren, wobei die Befestigungsplatten (14) in Ebenen parallel zu den Leitungsplatten (3) in der Mitte der Längsrichtung der Batterien (1) angeordnet sind; und wobei die Befestigungsplatten (14) mit Befestigungsansätzen (15) zur Befestigung der Ausgangsanschluss-Leitungsplatten (8) mit Festellschrauben (85) und zum Montieren von Vorsprüngen (16) zur Befestigung der Ausgangsanschluss-Leitungsplatten (8) in bestimmten Positionen versehen sind.

18. Batteriesystem gemäß Anspruch 1, das ein Batteriesystem ist, das an Bord eines elektrisch versorgten Fahrzeugs installiert ist.

19. Batteriesystem gemäß Anspruch 1, wobei das äußere Gehäuse (2) ein Paar von Oberflächenplatten (20) mit rechteckigen Außenlinien und Umfangswände (21) aufweist, welche die rechteckigen Oberflächenplatten (20) verbinden, wobei die Batterieanordnung (10) in dem äußeren Gehäuse (2) in einer Weise aufgenommen ist, welche die Batterien (1) senkrecht zu den Oberflächenplatten (20) angeordnet, wobei die Elektroden (1A) an Enden von allen Batterien (1) entgegengesetzt zu den inneren Oberflächen der Oberflächenplatten (20) angeordnet sind, und wobei die Leitungsplatten (3) zwischen den Batterien (1) und den Oberflächenplatten (20) angeordnet sind.

## Revendications

1. Système de batterie logeant un ensemble de batteries (10) permettant de disposer, en positions fixes, plusieurs batteries (1) qui peuvent être chargées, l'ensemble de batteries (10) comprenant :
plusieurs batteries (1) qui peuvent être chargées et ont des électrodes (1A) au niveau de leurs extrémités ;
un support de batterie (11) qui dispose la pluralité de batteries (1) sur plusieurs rangées et colonnes ;
une pluralité de plaques de plomb (3) raccordées aux électrodes (1A) au niveau des extrémités des batteries (1) disposées dans des positions fixes par le support de batterie (11) pour raccorder les batteries (1) adjacentes, en série et en parallèle ; et
des sorties externes (9) raccordées aux plaques de plomb de sortie (3X) qui sont des plaques de plomb (3) disposées au niveau des côtés de sortie des batteries (1) pour faire sortir la batterie (1) à l'extérieur du système de batterie,
dans lequel le support de batterie (11) dispose la pluralité de batteries (1) dans une orientation parallèle dans plusieurs rangées et colonnes et expose les électrodes (1A) aux deux extrémités des batteries (1) dans des positions qui permettent le raccordement aux plaques de plomb (3), dans lequel :
la pluralité de plaques de plomb (3) raccordent les électrodes (1A) aux extrémités des batteries (1), les plaques de plomb (3) raccordent les batteries (1) dans la même colonne en parallèle et dans les colonnes adjacentes en série, la pluralité de batteries (1) disposées dans plusieurs colonnes ont ces colonnes raccordées en série, une plaque de plomb à sortie positive (3Xa) est disposée à une extrémité de l'ensemble de batteries (10), et une plaque de plomb à sortie négative (3Xb) est raccordée à l'autre extrémité de l'ensemble de batteries (10), **caractérisé en ce que** :
l'ensemble de batteries (10) a une sortie externe du côté positif (9) disposée à l'extrémité avec la plaque de plomb à sortie positive (3Xa) et une sortie externe du côté négatif (9) disposée à l'extrémité avec la plaque de plomb à sortie négative (3Xb), et
chaque plaque de plomb de sortie (3X) est prévue avec une extension de sortie (3B) pour se raccorder avec une sortie externe (9), l'extension de sortie (3B) est fixée à un bord latéral d'une section de raccordement de batterie (3A) qui raccorde une pluralité de batteries (1) en parallèle et l'extension de sortie (3B) est raccordée à la sortie externe (9).

2. Système de batterie selon la revendication 1, dans lequel les sorties externes (9) sont prévues avec des plaques de plomb de borne de sortie (8) montées sur le support de batterie (11), et les bornes de sortie (7) sont fixées aux plaques de plomb de borne de sortie (8) avec une partie exposée à l'extérieur du boîtier externe (2).

3. Système de batterie selon la revendication 2, dans lequel les bornes de sortie (7) sont des tiges métalliques (70) fixées aux plaques de plomb de borne de sortie (8).

4. Système de batterie selon la revendication 2, dans lequel une plaque de plomb de borne de sortie (8) est composée d'une première plaque de plomb (81A) raccordée à une extension de sortie (3B) d'une plaque de plomb de sortie (3X) et une seconde plaque de plomb (81B) raccordée à une borne de sortie (7) et la première plaque de plomb (81A) et la seconde plaque de plomb (81B) sont raccordées via une fiche de test (4).

5. Système de batterie selon la revendication 2, dans lequel une plaque de plomb de borne de sortie (8) est composée d'une première plaque de plomb (81A) raccordée à une extension de sortie (3B) d'une plaque de plomb de sortie (3X) et une seconde plaque de plomb (81B) raccordée à une borne de sortie (7) et la première plaque de plomb (81A) et la seconde plaque de plomb (81B) sont raccordées via un dispositif de protection.

6. Système de batterie selon la revendication 2, dans lequel une plaque de plomb de borne de sortie (8) est prévue avec une pièce de plaque de plomb (82) qui raccorde une extension de sortie (3B) de plaque de plomb de sortie (3X) à une borne de sortie (7) et l'extension de sortie (3B) et la pièce de plaque de plomb (82) sont raccordées par un dispositif de protection (6).

7. Système de batterie selon la revendication 2, dans lequel une plaque de plomb de borne de sortie (8) est dotée d'une pièce de plaque de plomb (82) qui raccorde une extension de sortie (3B) d'une plaque de plomb de sortie (3X) à une borne de sortie (7) et l'extension de sortie (3B) et la pièce de plaque de plomb (82) sont raccordées via une fiche de test.

8. Système de batterie selon la revendication 1, dans lequel les extensions de sortie (3B) de la plaque de plomb de sortie (3X) sont progressivement effilées pour devenir progressivement plus larges, à partir des sections d'extrémité pliées (3b) au niveau des extrémités externes (9) vers les sections de raccordement de batterie (3A).

9. Système de batterie selon la revendication 1, dans lequel les extensions de sortie (3B) de la plaque de plomb de sortie (3X) ont des formes qui sont pliées par rapport aux sections de raccordement de batterie (3A) dans une direction parallèle au sens de la longueur des batteries (1).

10. Système de batterie selon la revendication 1, dans lequel les extensions de sortie (3B) de la plaque de plomb de sortie (3X) sont effilées afin de devenir progressivement plus larges, à partir des sections d'extrémité pliées (3b) au niveau des sorties externes (9) vers les sections de raccordement de batterie (3A) ; et les extensions de sortie (3B) ont des formes qui sont pliées par rapport aux sections de raccordement de batterie (3A) dans une direction parallèle au sens de la longueur des batteries (1).

11. Système de batterie selon la revendication 10, dans lequel chaque plaque de plomb de sortie (3X) est prévue avec une extension de sortie (3B) qui est pliée en angle droit sur un côté latéral de la section de raccordement de batterie (3A) raccordant une pluralité de batteries (1) en parallèle.

12. Système de batterie selon la revendication 8, dans lequel l'extrémité de chaque extension de sortie (3B) a une section d'extrémité pliée (3b) qui forme un angle droit avec l'extension de sortie (3B), et chaque section d'extrémité pliée (3b) est raccordée à une plaque de plomb de borne de sortie (8).

13. Système de batterie selon la revendication 1, dans lequel les bornes de sortie (7) sont exposées à l'extérieur de la surface du boîtier externe (2).

14. Système de batterie selon la revendication 1, dans lequel le boîtier externe (2) est divisé en un premier boîtier externe (2A) et en un second boîtier externe (2B), le premier boîtier externe (2A) et le second boîtier externe (2B) sont fixés ensemble avec des vis de fixation de boîtier (38), le boîtier externe (2) est prévu avec des bossages de vis (29) pour fixer le support de batterie (11) dans une position fixe, le support de batterie (11) a des pièces de montage de boîtier (19) pour insérer les bossages de vis (29) de boîtier externe (2) dans des positions spécifiques, les bossages de vis (29) sont insérés dans les pièces de montage de boîtier (19) pour raccorder le support de batterie (11) dans une position fixe dans le boîtier externe (2) et le premier boîtier externe (2A) et le second boîtier externe (2B) sont fixés avec des vis de fixation de boîtier (38) pour supporter le support de batterie (11) dans une position fixe à l'intérieur du boîtier externe (2).

15. Système de batterie selon la revendication 1, dans lequel le support de batterie (11) est prévu avec des saillies d'alignement (59) pour fixer les plaques de plomb (3), les plaques de plomb (3) ont des trous d'alignement (3c) pour l'insertion des saillies d'alignement (59) et les plaques de plomb (3) peuvent être disposées en positions fixes sur le support de batterie (11) en insérant les saillies d'alignement (59) dans les trous d'alignement (3c).

16. Système de batterie selon la revendication 15, dans lequel le support de batterie (11) est prévu avec une pluralité de colonnes de régions évidées (13) formées pour maintenir les plaques de plomb (3) en positions fixes séparées aux deux extrémités ouvertes des sections de charge de batterie (12), les plaques de plomb (3) sont insérées dans les régions évidées (13) et raccordées aux électrodes (1A) aux extrémités des batteries (1), et les régions évidées (13) disposent la pluralité de plaques de plomb (3) en positions fixes.

17. Système de batterie selon la revendication 1, dans lequel les deux extrémités du support de batterie (11A) sont prévues avec des plaques de fixation (14) pour monter les plaques de plomb de borne de sortie (8) ; les plaques de fixation (14) sont disposées en plans parallèles aux plaques de plomb (3) au centre dans le sens de la longueur des batteries (1) ; et les plaques de fixation (14) sont prévues avec des bossages de fixation (15) pour fixer les plaques de plomb de borne de sortie (8) avec des vis de réglage (85), et des saillies de montage (16) pour fixer les plaques de plomb de borne de sortie (8) dans des positions spécifiques.

18. Système de batterie selon la revendication 1 qui est un système de batterie installé à bord d'un véhicule électrique.

19. Système de batterie selon la revendication 1, dans lequel le boîtier externe (2) a une paire de plaques de surface (20) avec des contours rectangulaires et des parois périmétrales (21) raccordant les plaques de surface rectangulaires (20), l'ensemble de batterie (10) est logé dans le boîtier externe (2) de sorte qu'il dispose les batteries (1) perpendiculairement aux plaques de surface (20), les électrodes (1A) aux extrémités de toutes les batteries (1) sont disposées à l'opposé des surfaces internes des plaques de surface (20) et les plaques de plomb (3) sont disposées entre les batteries (1) et les plaques de surface (20).
